# EUROPEAN PATENT APPLICATION

(11) **EP 4 231 691 A1**
(43) Date of publication of application: **23.08.2023**
(21) Application number: 21880048.0
(22) Date of filing: 11.10.2021
(51) Int. Cl.: H04W 16/28, H04W 56/00, H04W 72/04, H04W 72/12, H04W 28/04, H04W 74/08

(54) **COMMUNICATION SYSTEM**

(30) Priority: 13.10.2020 JP 2020172715
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Meissner Bolte Partnerschaft mbB
(86) International application number: PCT/JP2021/037553
(87) International publication number: WO 2022/080309

(57) **Abstract**

A communication system includes: a base station (gNB); and a communication terminal (UE) connected to the base station, and in a case where the base station causes the communication terminal to transmit a data signal, the base station notifies the communication terminal of information about a demodulation reference signal to be transmitted together with a data signal, and the communication terminal transmits a data signal and a demodulation reference signal in accordance with the information provided from the base station.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

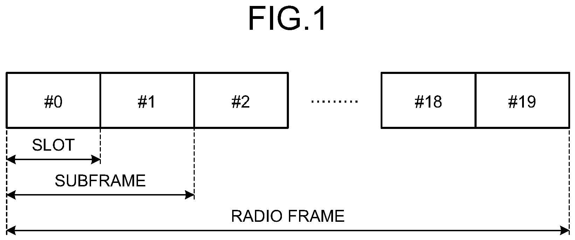

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DMRS) and a sounding reference signal (SRS).

Transport channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH) .

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes. In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020. For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)) .

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

In addition, in 3GPP, support of a service (which may be an application) using sidelink (SL) communication in both an EPS and a 5G core system has been studied (see Non Patent Literatures 1, 16, 20, 21, 22, and 23) . Examples of the service using the SL communication include a V2X service and a proximity service.

### Citation List

### Non Patent Literature

Non Patent Literature 1: 3GPP TS36.300 V16.2.0
Non Patent Literature 2: 3GPP S1-083461
Non Patent Literature 3: 3GPP TR36.814 V9.2.0
Non Patent Literature 4: 3GPP TR36.912 V16.0.0
Non Patent Literature 5: "Scenarios, requirements and KPIs for 5G mobile and wireless system", ICT-317669-METIS/D1.1
Non Patent Literature 6: 3GPP TR23.799 V14.0.0
Non Patent Literature 7: 3GPP TR38.801 V14.0.0
Non Patent Literature 8: 3GPP TR38.802 V14.2.0
Non Patent Literature 9: 3GPP TR38.804 V14.0.0
Non Patent Literature 10: 3GPP TR38.912 V16.0.0
Non Patent Literature 11: 3GPP RP-172115
Non Patent Literature 12: 3GPP TS37.340 V16.2.0
Non Patent Literature 13: 3GPP TS38.211 V16.2.0
Non Patent Literature 14: 3GPP TS38.213 V16.2.0
Non Patent Literature 15: 3GPP TS38.214 V16.2.0
Non Patent Literature 16: 3GPP TS38.300 V16.2.0
Non Patent Literature 17: 3GPP TS38.321 V16.1.0
Non Patent Literature 18: 3GPP TS38.212 V16.2.0
Non Patent Literature 19: 3GPP TS38.331 V16.1.0
Non Patent Literature 20: 3GPP TR23.703 V12.0.0
Non Patent Literature 21: 3GPP TS23.501 V16.5.0
Non Patent Literature 22: 3GPP TS23.287 V16.3.0
Non Patent Literature 23: 3GPP TS23.303 V16.0.0
Non Patent Literature 24: 3GPP R1-2003835
Non Patent Literature 25: 3GPP R1-2005395

### Summary

### Technical Problem

Regarding NR, operation in a frequency band higher than that in LTE is planned. In a higher frequency band, path loss increases and QoS decreases. Therefore, coverage enhancement is required. In addition, the coverage enhancement is also required in order to reduce capital investment in constructing a system and operating expenditure. The question is how to achieve the coverage enhancement in the communication system to improve the communication quality and reduce cost in the communication system as described above.

In view of the above problem, one of objects of the present disclosure is to improve communication quality in a communication system. In addition, another one of the objects is to reduce cost in the communication system.

### Solution to Problem

A communication system according to the present disclosure includes: a base station; and a communication terminal connected to the base station, wherein in a case where the base station causes the communication terminal to transmit a data signal, the base station notifies the communication terminal of information about a demodulation reference signal to be transmitted together with a data signal, and the communication terminal transmits a data signal and a demodulation reference signal in accordance with the information provided from the base station.

### Advantageous Effects of Invention

The present disclosure achieves an effect that it is possible to realize a communication system capable of improving communication quality.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a sequence diagram illustrating an example of a method for configuring a DMRS in PUSCH retransmission in a first embodiment.
FIG. 15 is a sequence diagram illustrating an example of a method for configuring a DMRS in first PUSCH transmission in the first embodiment.
FIG. 16 is a sequence diagram illustrating an example of a method for decreasing DMRSs in PUSCH repeated transmission in a first modification of the first embodiment.
FIG. 17 is a sequence diagram illustrating another example of the method for decreasing DMRSs in PUSCH repeated transmission in the first modification of the first embodiment.
FIG. 18 is a sequence diagram illustrating an example of a method in which a UE requests a gNB to configure PUSCH repeated transmission in a third modification of the first embodiment.
FIG. 19 is a diagram illustrating a configuration of a conventional SSB.
FIG. 20 is a diagram illustrating an example in which the number of symbols of a PBCH in an SSB is increased in a second embodiment.
FIG. 21 is a diagram illustrating another example in which the number of symbols of the PBCH in the SSB is increased in the second embodiment.
FIG. 22 is a sequence diagram illustrating an example of a method for transmitting a PDCCH for an RAR a plurality of times using different beams in an RA process in a first modification of the second embodiment.
FIG. 23 is a sequence diagram illustrating an example of a method for transmitting a PDSCH including an RAR message a plurality of times using different beams in the RA process in a second modification of the second embodiment.
FIG. 24 is a sequence diagram illustrating an example of a method for transmitting the PDCCH for the RAR and the PDSCH including the RAR message a plurality of times using different beams in the RA process in a third modification of the second embodiment.
FIG. 25 is a sequence diagram illustrating an example of a method for configuring repeated transmission in retransmission of an MSG3 in a third embodiment.
FIG. 26 is a sequence diagram illustrating an example of a method for stopping repeated transmission of the MSG3 at an early stage in a fourth embodiment.
FIG. 27 is a sequence diagram illustrating another example of the method for stopping repeated transmission of the MSG3 at an early stage in the fourth embodiment.
FIG. 28 is a diagram illustrating an example in a case where the number of PRACH preamble groups is four in a fifth embodiment.
FIG. 29 is a sequence diagram illustrating an example of a method for performing the notification of information about coverage enhancement before the UE transitions to an abnormal state in a sixth embodiment.

### Description of Embodiments

### First Embodiment.

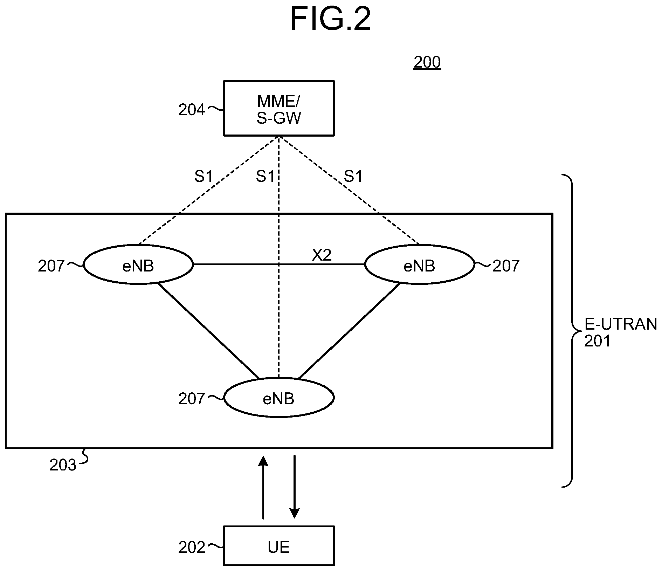

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a non-moving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment 202 has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTRAN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

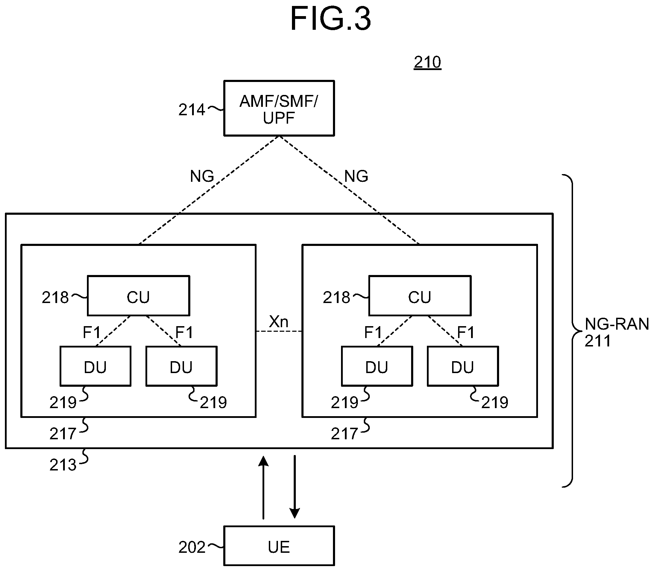

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC) .

If a control protocol for the UE 202, for example, radio resource control (RRC), and a user plane (hereinafter, sometimes referred to as a U-plane), for example, service data adaptation protocol (SOAP), packet data convergence protocol (PDCP), radio link control (RLC), medium access control (MAC), or physical layer (PHY), are terminated in the NR base station 213, the NG-RAN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

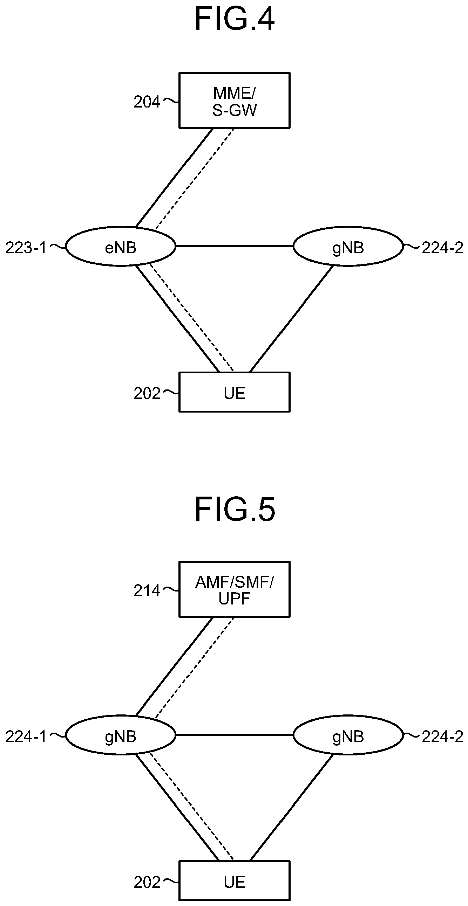

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

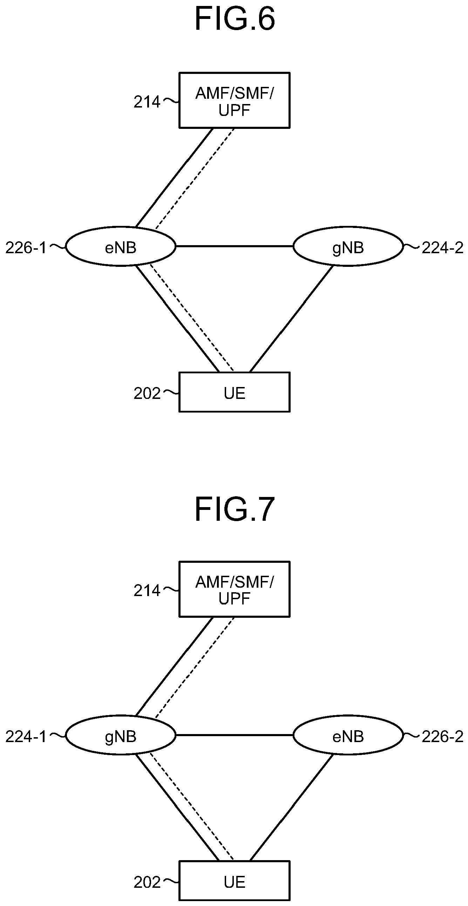

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

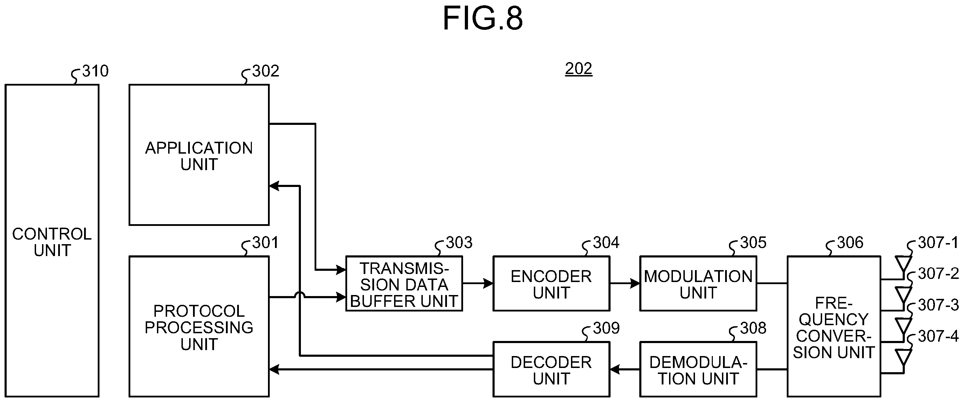

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

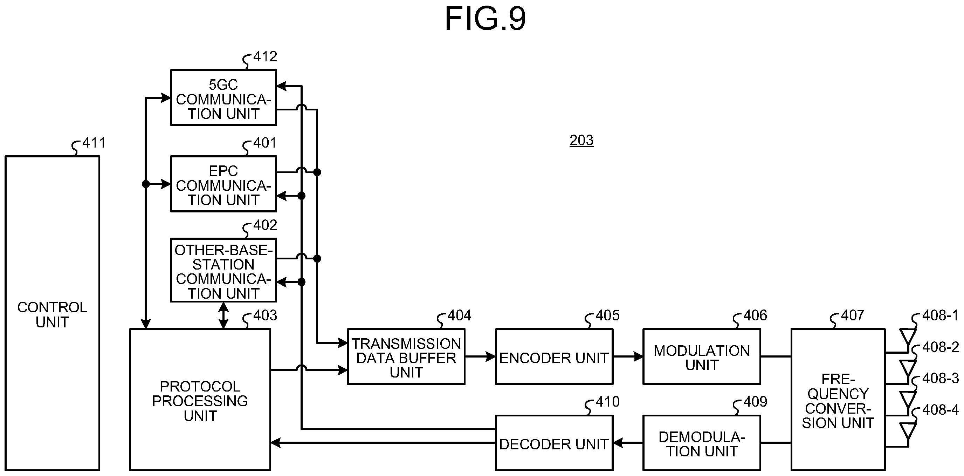

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411.
Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

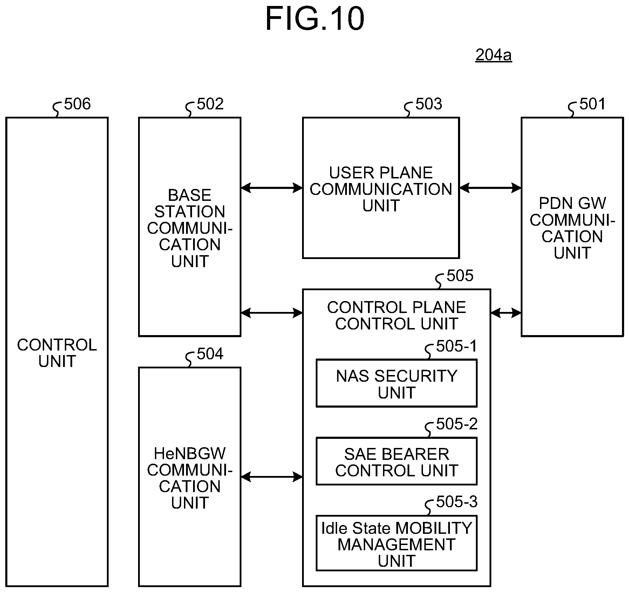

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW). Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

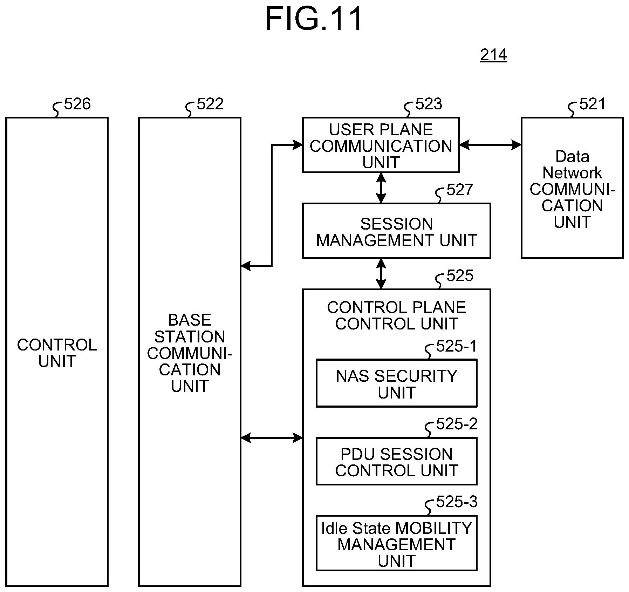

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

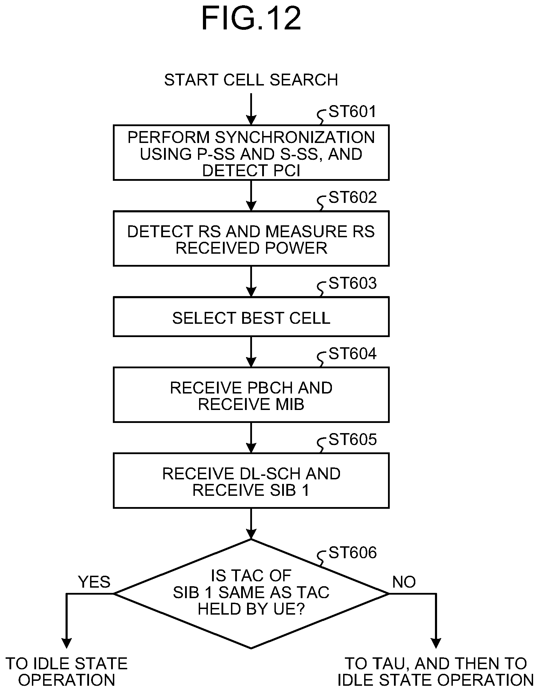

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core-network-side device") updates the tracking area list on the basis of an identification number (such as a UE-ID) of a communication terminal transmitted from the communication terminal together with a TAU request signal. The core-network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

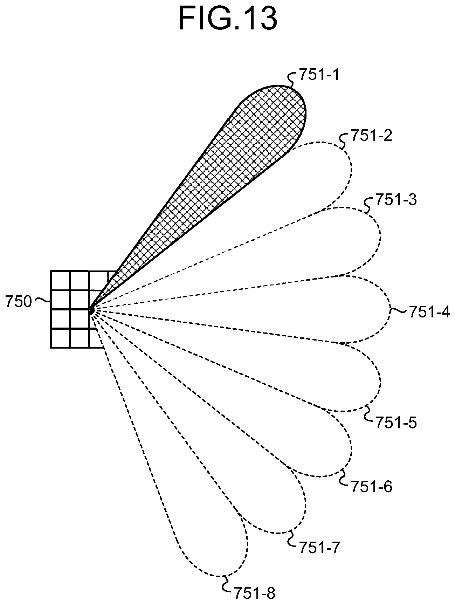

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

Regarding NR, operation in a frequency band higher than that in LTE is planned. In a higher frequency band, path loss increases and QoS decreases. Therefore, coverage enhancement is required. In addition, the coverage enhancement is also required in order to reduce capital investment in constructing a system and operating expenditure. In 3GPP, PUSCH coverage enhancement by increasing or decreasing the number of DMRSs and the like have been discussed (see Non Patent Literatures 24 and 25).

However, there is no disclosure about a configuration method in such a case of increasing or decreasing the number of DMRSs. If a method for configuring an increase or a decrease in the number of DMRSs is not shared between a gNB and a UE, coordinated transmission/reception processes cannot be performed, and communication quality may deteriorate or communication interruption may occur due to malfunction. Therefore, coverage enhancement cannot be achieved.

DMRS configuration is conventionally performed by RRC signaling prior to transmission of a PUSCH. Therefore, the DMRS configuration provided by the RRC signaling is used as the DMRS configuration in subsequent PUSCH transmission. However, a radio wave propagation environment in first PUSCH transmission is different from that in PUSCH retransmission. Therefore, even if PUSCH retransmission for recovering a communication failure in first PUSCH transmission is performed, a DMRS configuration suitable for the radio wave propagation environment cannot be performed in the PUSCH retransmission, and thus the communication quality deteriorates.

The present embodiment discloses a method for solving such a problem.

In the present embodiment, the above problem is solved by dynamically configuring the PUSCH. A DMRS for a PUSCH may be dynamically configured. Hereinafter, a configuration of the PUSCH and/or a configuration of the DMRS for the PUSCH may be referred to as a "configuration of the DMRS of the PUSCH". That is, in a communication system according to the present embodiment, the DMRS of the PUSCH is dynamically configured. In addition, the DMRS of the PUSCH is enabled to be configured in PUSCH retransmission. In the PUSCH retransmission, the configuration of the DMRS of the PUSCH is enabled to be performed in each retransmission. As the configuration of the DMRS, switching between a plurality of DMRS configurations may be enabled to be performed.

The gNB notifies the UE of information about the configuration of the DMRS of the PUSCH on a PDCCH. Part or all of the information about the configuration of the DMRS of the PUSCH conventionally configured by RRC signaling is preferably provided on the PDCCH. The information may be included in downlink control information (DCI) and provided. A new DCI format for including the information may be provided. On a PDCCH for PUSCH retransmission, information about the configuration of the DMRS of the PUSCH of the retransmission is provided.

The information about the configuration of the DMRS of the PUSCH to be provided on the PDCCH need not be provided in advance by RRC signaling. The amount of information of RRC signaling can be reduced.

The information about the configuration of the DMRS of the PUSCH to be provided on the PDCCH may be provided in advance by RRC signaling. In a case where the information is provided on the PDCCH, the information is preferably given priority over the information provided by RRC signaling. In a case where the information is not provided on the PDCCH, the information provided by RRC signaling is used. Thus, a DMRS configuration suitable for the transmission of the PUSCH can be performed by using the PDCCH only when a dynamic configuration is necessary due to a rapid change in the radio wave propagation environment or the like. In such a case where a situation changes between the first transmission and the retransmission of the PUSCH, it is possible to dynamically configure DMRS configuration suitable also for the retransmission.

Examples of the information about the configuration of the DMRS of the PUSCH to be provided on the PDCCH include information about resource allocation for the PUSCH, information about repeated transmission of the PUSCH, information about resource allocation for the DMRS for the PUSCH, and information about a modulation scheme. Examples of the information about resource allocation include information about resource allocation on a time axis, information about resource allocation on a frequency axis, and information about a sequence.

Regarding the information about the configuration of the DMRS of the PUSCH to be provided on the PDCCH, 14 specific examples will be given below.
(1) UL resource allocation type of the PUSCH.
(2) Mapping type of the PUSCH (either type A or type B) .
(3) Time domain allocation of the PUSCH.
(4) The index of the time domain allocation of the PUSCH.
(5) Information about a subcarrier spacing of the PUSCH.
(6) DMRS symbol location in a case where the mapping type of the PUSCH is type A.
(7) PUSCH repetition type.
(8) The number of repetitions of the PUSCH.
(9) DMRS configuration type.
(10) Maximum symbol length of the DMRS.
(11) Symbol length of the DMRS.
(12) The number and/or location of added DMRSs.
(13) Presence or absence of a transform precoder.
(14) A combination of (1) to (13).

For example, in a case where the gNB determines that it is necessary to increase DMRSs in PUSCH retransmission, the gNB configures the number of DMRSs by using the information on the PDCCH so as to increase the number of DMRSs to be larger than the number thereof configured by RRC. Thus, the demodulation accuracy of the PUSCH can be improved, and the reception quality of the PUSCH can be improved. For example, in a case where the gNB determines that it is necessary to increase PUSCH transmission resources in PUSCH retransmission, the gNB configures the number of DMRSs by using the information on the PDCCH so as to decrease the number of DMRSs to be smaller than the number thereof configured by RRC. Thus, it is possible to increase PUSCH resources by an amount corresponding to the decrease in the DMRSs, the demodulation accuracy of the PUSCH can be improved, and the reception quality of the PUSCH can be improved.

A set including a combination of the information about the configuration of the DMRS of the PUSCH to be provided on the PDCCH may be provided. One or a plurality of sets may be employed as candidates for the information about the configuration of the DMRS of the PUSCH to be provided on the PDCCH. An index may be assigned to each set in the candidates to form a candidate list.

The gNB may notify the UE of the candidate list by RRC signaling, and may notify the UE on the PDCCH of an index indicating a set including a combination of the information about the configuration of the DMRS of the PUSCH to be provided on the PDCCH. The index may be included in the DCI and notified to the UE on the PDCCH. Thus, the amount of information to be transmitted on the PDCCH can be reduced.

A method will be disclosed in which the gNB determines a dynamic configuration of the DMRS of the PUSCH. The gNB uses the reception quality of a UL DMRS received from the UE to determine the DMRS configuration for subsequent PUSCH transmission. For example, the gNB uses the reception quality of the DMRS of first PUSCH transmission received from the UE to determine the DMRS configuration for PUSCH retransmission in a case of performing the PUSCH retransmission. As another method, the gNB may use the reception quality of an SRS transmitted by the UE to determine the DMRS configuration for subsequent PUSCH transmission. As another method, the gNB may use a CSI received from the UE to determine the DMRS configuration for subsequent PUSCH transmission.

The gNB can configure the SRS transmission for the UE, and the configuration of the SRS transmission may be periodic, semi-persistent, or aperiodic. In addition, the gNB can configure a CSI reporting for the UE, and the configuration of the CSI reporting may be periodic, semi-persistent, or aperiodic. The gNB enables a DMRS configuration suitable for the radio wave propagation environment by using the SRS and the CSI received from the UE using these configurations.

For example, in a case where the gNB receives first PUSCH transmission, when the reception quality of the DMRS is poor and the PUSCH cannot be received, the number of DMRSs is preferably increased as the DMRS configuration for PUSCH retransmission. Consequently, the reception quality of the DMRS of the PUSCH retransmission can be improved, and the reception probability of the PUSCH retransmission can be improved.

For example, in a case where the gNB receives first PUSCH transmission, when the reception quality of a PUSCH part is poor and the PUSCH cannot be received, the number of DMRSs is preferably decreased as the DMRS configuration for PUSCH retransmission. The UE increases PUSCH resources by an amount corresponding to the decrease in the DMRSs, and the UE is caused to perform transmission. Consequently, the reception quality of the PUSCH retransmission can be improved, and the reception probability of the PUSCH retransmission can be improved.

As described above, by enabling the DMRS to be configured in the PUSCH retransmission, the reception quality of the PUSCH retransmission can be improved, and the reception probability of the PUSCH retransmission can be improved. Therefore, the coverage enhancement of the PUSCH can be achieved.

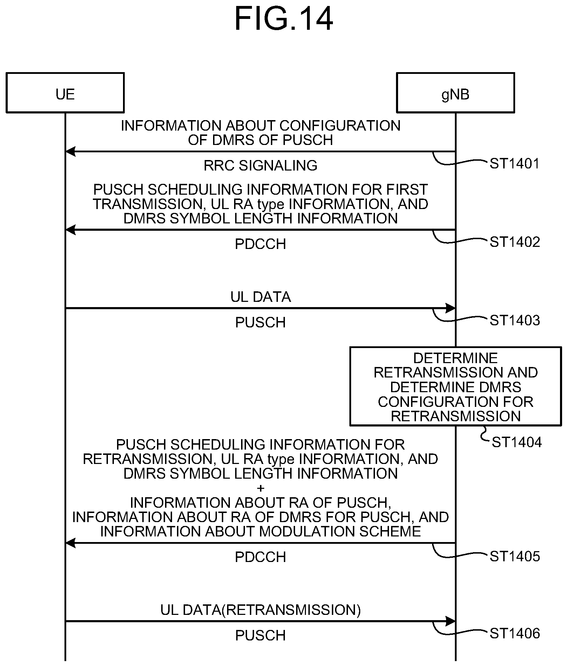

FIG. 14 is a sequence diagram illustrating an example of a method for configuring a DMRS in PUSCH retransmission in the first embodiment. In step ST1401, the gNB notifies the UE of information about the configuration of the DMRS of the PUSCH. This notification is performed prior to transmission of the PUSCH. RRC signaling is used for notification of the information. As the RRC signaling, for example, an RRCReconfiguration message may be used, or an MIB or an SIB may be used. These may be used in combination.

In step ST1402, the gNB notifies the UE of scheduling information for first PUSCH transmission. The gNB notifies the UE of UL resource allocation type information (UL RA type information) and DMRS symbol length information together with PUSCH scheduling information for first transmission, or includes the UL resource allocation type information (UL RA type information) and the DMRS symbol length information in the PUSCH scheduling information and performs the notification thereof. These pieces of information may be included in the DCI. In step ST1403, the UE transmits UL data on the PUSCH by using the information received from the gNB in steps ST1401 and ST1402. The UE transmits the DMRS for the PUSCH together with the PUSCH.

In step ST1404, the gNB determines PUSCH retransmission in a case where the gNB cannot receive the UL data. In addition, in step ST1404, the gNB determines the DMRS configuration for the PUSCH retransmission. For example, the determination method disclosed above may be used to determine the DMRS configuration for the PUSCH retransmission. In step ST1405, the gNB notifies the UE of the information about resource allocation for the PUSCH, the information about resource allocation for the DMRS of the PUSCH, and the information about the modulation scheme, in addition to PUSCH scheduling information for retransmission, the UL resource allocation type information, and the DMRS symbol length information. These pieces of information may be included in the DCI.

In step ST1406, the UE retransmits the PUSCH in order to retransmit the UL data by using the information received from the gNB in step ST1405. In a case where the information about the configuration of the DMRS of the PUSCH received in advance by the UE in step ST1401 overlaps with the information received in step ST1405, the UE preferably performs the configuration of the DMRS of the PUSCH by using the information received in step ST1405. Thus, a dynamic configuration can be performed, and a DMRS configuration for the PUSCH retransmission in consideration of the most recent radio wave propagation environment can be performed.

In a case where there is no need to change the DMRS configuration in PUSCH retransmission from the DMRS configuration in first transmission, the gNB need not notify the UE of the DMRS configuration for PUSCH retransmission. For example, in step ST1404, the gNB determines that there is no need to change the DMRS configuration in PUSCH retransmission from that in first transmission. In step ST1405, the gNB notifies the UE of the PUSCH scheduling information for retransmission, but need not notify the UE of the information about resource allocation for the PUSCH, the information about resource allocation for the DMRS of the PUSCH, and the information about the modulation scheme. Thus, the amount of information necessary for signaling can be reduced.

With the sequence illustrated in FIG. 14, the DMRS can be configured in PUSCH retransmission.

The method for enabling a dynamic configuration of the DMRS of the PUSCH in PUSCH retransmission has been disclosed. Here, a method for enabling a dynamic configuration of the DMRS of the PUSCH in first PUSCH transmission will be disclosed. The gNB performs the notification, on a PDCCH for first PUSCH transmission, of information about the configuration of the DMRS of the PUSCH of the first transmission.

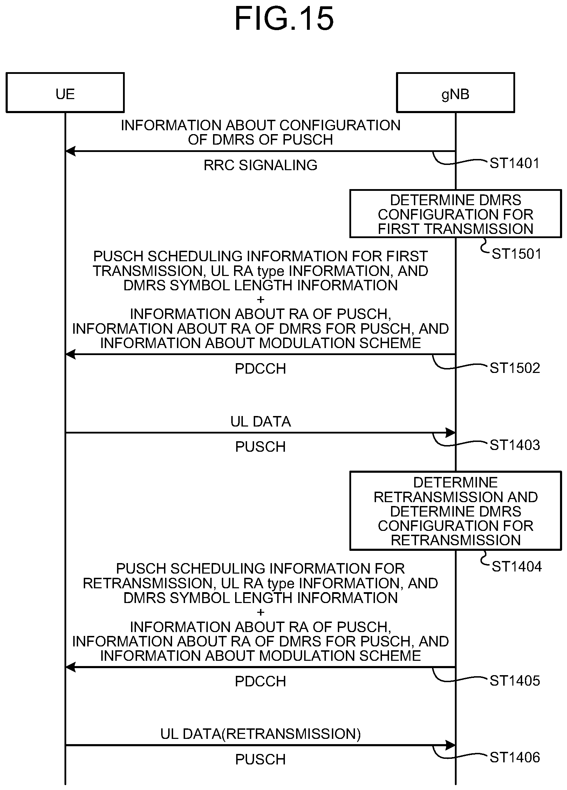

FIG. 15 is a sequence diagram illustrating an example of a method for configuring a DMRS in first PUSCH transmission in the first embodiment. In FIG. 15, steps common to those in FIG. 14 are denoted by the same step numbers as those therein, and a common description will be omitted. In step ST1501, the gNB determines a DMRS configuration for the first PUSCH transmission. As a method for determining the DMRS configuration, for example, it is preferable to appropriately apply a method in which the gNB determines the dynamic configuration of the DMRS of the PUSCH disclosed above.

In step ST1502, the gNB notifies the UE of the information about resource allocation for the PUSCH, the information about resource allocation for the DMRS of the PUSCH, and the information about the modulation scheme, in addition to the PUSCH scheduling information for first transmission, the UL resource allocation type information, and the DMRS symbol length information. These pieces of information may be included in the DCI.

In step ST1403, the UE transmits the PUSCH in order to transmit the UL data by using the information received from the gNB in step ST1502. In a case where the information about the configuration of the DMRS of the PUSCH received in advance by the UE in step ST1401 overlaps with the information received in step ST1502, the UE preferably performs the configuration of the DMRS of the PUSCH by using the information received in step ST1502. Thus, a dynamic configuration can be performed also for the first transmission of the PUSCH, and, for example, even in a case where there is a large time interval between the configuration using RRC signaling performed in advance and the first transmission of the PUSCH, the DMRS configuration in the first PUSCH transmission in consideration of the most recent radio wave propagation environment can be performed.

In a case where the gNB cannot receive the first PUSCH transmission from the UE, the gNB causes the UE to perform PUSCH retransmission. At that time, a method for configuring the DMRS in PUSCH retransmission as disclosed in FIG. 14 may be applied. Thus, not only in the first transmission but also in the retransmission of the PUSCH, a configuration of the DMRS of the PUSCH in consideration of the most recent radio wave propagation environment can be performed.

The UE may notify the gNB of a message requesting a change in the configuration of the DMRS of the PUSCH. For example, the message may be included in the first transmission of the PUSCH and notified to the gNB. Alternatively, the message may be included in the retransmission of the PUSCH and notified to the gNB. The message may be included in a MAC-CE and notified to the gNB. Thus, it is possible to flexibly configure the DMRS of the PUSCH including the situation of the UE.

The UE may notify the gNB of a message requesting a change in a configuration of a DMRS of a PDSCH. For example, the message may be included in UCI and notified to the gNB on a PUCCH. For example, the message may be included in Ack/Nack information of the PDSCH and notified to the gNB, or may be notified to the gNB together with the Ack/Nack information, on the PUCCH. Thus, it is possible to flexibly configure the DMRS of the PDSCH including a PDSCH reception status of the UE.

Not only for the DMRSs of the PUSCH and the PDSCH, but also for DMRSs of the PUCCH and the PDCCH, a message requesting a change in a configuration may be provided and notified from the UE to the gNB. Thus, the DMRS of each channel can be flexibly configured. Therefore, the communication quality of each channel can be improved.

As a method of coverage enhancement, coverage enhancement in a random access process (hereinafter, also referred to as an RA process) has been studied. The RA process is performed by transmission and reception of MSG1 to MSG4 between the UE and the gNB. The UE transmits the MSG3 to the gNB when receiving a random access response (RAR) which is the MSG2 from the gNB. The MSG3 is transmitted by using the PUSCH.

At the stage of performing the RA process, the gNB does not perform a configuration for the UE by RRC signaling dedicated to the UE. The configuration of the DMRS of the PUSCH for the MSG3 is limited to a configuration performed common to UEs using the MIB or the SIB, and a configuration performed using the RAR. For example, there are the mapping type of the PUSCH, the time domain allocation of the PUSCH, the index of the time domain allocation of the PUSCH, the DMRS symbol location when the mapping type of the PUSCH is type A, and modulation scheme information. Other pieces of information are statically determined in a standard or the like. That is, they are common to all cells, and a configuration suitable for the radio wave propagation environment that differs from cell to cell cannot be performed.

Here, a method for solving such a problem will be disclosed.

In order to solve the above problem, configuration information of the DMRS of the PUSCH for the MSG3 may be provided. For example, the gNB broadcasts the configuration of the DMRS of the PUSCH for the MSG3 using the MIB or the SIB. The configuration information of the DMRS of the PUSCH for the MSG3 may be part or all of the information about the configuration of the DMRS of the PUSCH to be provided on the PDCCH disclosed above. For example, the information about repeated transmission of the PUSCH and the information about resource allocation for the DMRS of the PUSCH are preferably included.

The information may be part of common configuration information of the PUSCH (PUSCH-ConfigCommon). For example, the information may be part of common configuration information of an RACH (RACH-ConfigCommon). The gNB broadcasts the configuration of the DMRS of the PUSCH for the MSG3 using the MIB or the SIB. Thus, the configuration of the DMRS of the PUSCH for the MSG3 suitable for the radio wave propagation environment that differs from cell to cell can be performed.

As a method for improving the reception quality in the first transmission of the PUSCH for the MSG3, the method for enabling the DMRS to be configured in first PUSCH transmission disclosed above may be appropriately applied. An RAR message may be used instead of the PDCCH for scheduling the PUSCH. Alternatively, the PDCCH for scheduling the RAR message may be used instead of the PDCCH for scheduling the PUSCH.

For example, the gNB notifies the UE of the configuration of the DMRS of the PUSCH for the MSG3 together with the RAR message, or includes the configuration of the DMRS of the PUSCH for the MSG3 in the RAR message and notifies the UE thereof. The PDSCH is preferably used for these notifications. For example, the gNB may notify the UE of the configuration of the DMRS of the PUSCH for the MSG3 on the PDCCH for scheduling the PDSCH including the RAR message. The gNB notifies the UE of the configuration information of the DMRS of the PUSCH for the MSG3 together with DCI for scheduling, or includes the configuration information of the DMRS of the PUSCH for the MSG3 in the DCI and performs the notification thereof.

The configuration information of the DMRS of the PUSCH for the MSG3 may be part or all of the information about the configuration of the DMRS of the PUSCH to be provided on the PDCCH disclosed above. For example, the information about repeated transmission of the PUSCH and the information about resource allocation for the DMRS of the PUSCH may be included.

The configuration information of the DMRS of the PUSCH for the MSG3 may be statically determined in advance in a standard or the like. In a case where the information is provided from the gNB by the method disclosed above, the information is preferably given priority over information statically determined in a standard or the like. In a case where the information is not provided from the gNB, the information statically determined in advance in a standard or the like is used. Thus, a DMRS configuration suitable for the transmission of the PUSCH of the MSG3 can be performed only when a dynamic configuration is necessary due to a rapid change in the radio wave propagation environment or the like.

Thus, a dynamic configuration can be performed also for first transmission of the PUSCH for the MSG3, and the DMRS can be configured for the first PUSCH transmission in consideration of the most recent radio wave propagation environment.

As a method for improving the reception quality in the retransmission of the PUSCH for the MSG3, the method for enabling the DMRS to be configured in PUSCH retransmission disclosed above may be appropriately applied. The gNB preferably performs the notification of the configuration information of the DMRS of the PUSCH for the MSG3 by using a PDCCH for performing scheduling in the retransmission of the PUSCH for the MSG3. The gNB performs the notification of the configuration information of the DMRS together with DCI for scheduling, or includes the configuration information of the DMRS in the DCI and performs the notification thereof.

Thus, the DMRS can be dynamically configured also for the retransmission of the PUSCH for the MSG3, and the DMRS can be configured for the first PUSCH transmission in consideration of the most recent radio wave propagation environment.

The information about the configuration of the DMRS of the PUSCH to be provided on the PDCCH may be configured depending on the number of repeated transmissions. The information about the configuration of the DMRS of the PUSCH to be provided on the PDCCH may be configured for each repeated transmission. For example, information other than (7) and (8) among the specific examples of the information about the configuration of the DMRS of the PUSCH to be provided on the PDCCH disclosed above may be configured for each repeated transmission. Thus, in the transmission of the PUSCH including the repeated transmission, the DMRS can be dynamically configured, and the DMRS can be configured in consideration of the most recent radio wave propagation environment.

With the method disclosed in the present embodiment, the DMRS can be dynamically configured in the PUSCH retransmission. Therefore, the DMRS can be configured depending on the radio wave propagation environment that fluctuates from moment to moment. For example, it is possible, by decreasing the DMRSs, to increase a resource element (RE) to which the PUSCH can be mapped, and the communication quality of the PUSCH can be improved. For example, by increasing the DMRSs, the demodulation accuracy can be improved, and the communication quality of the PUSCH can be improved. In addition, the density of the DMRSs in the frequency axis direction can be changed by changing a modulation scheme between OFDM and DFT-s-OFDM. Furthermore, an effect similar to that in the case of increasing or decreasing the DMRSs described above can be obtained.

In addition, the DMRS can be dynamically configured also in the first PUSCH transmission. A similar effect can be obtained in a case where the radio wave propagation environment varies with the lapse of time from the configuration by RRC.

In addition, the DMRS can be dynamically configured also in transmission of the PUSCH including the MSG3. The DMRS can be configured depending on the radio wave propagation environment that fluctuates from moment to moment, and thus a similar effect can be obtained.

Thus, coverage enhancement can be achieved.

First Modification of First Embodiment.

The PUSCH can be repeatedly transmitted. In a case where the PUSCH is repeatedly transmitted, the DMRS is also transmitted in each repetition. Therefore, there may occur a problem in that overhead due to the DMRS increases with respect to repeated transmission of the PUSCH, and thus the communication quality of the PUSCH cannot be improved.

The present modification discloses a method for solving such a problem.

In order to solve the above problem, a communication system according to the present modification decreases DMRSs in repeated transmission of the PUSCH. Three methods for decreasing DMRSs will be disclosed below.
(Method 1) To decrease DMRSs in a frequency axis direction to which the DMRSs are mapped.
(Method 2) To decrease DMRSs in a time axis direction to which the DMRSs are mapped.
(Method 3) A combination of (Method 1) with (Method 2) .

Specific examples of (Method 1) will be disclosed. There are two types of DMRS configurations. They are DMRS configuration type 1 and type 2. In the DMRS configuration type 1, a DMRS is mapped every two subcarriers in one symbol. In the DMRS configuration type 2, two subcarriers are formed as one pair and a DMRS is mapped every three pairs in one symbol.

In (Method 1), for example, DMRSs are preferably thinned out in the DMRS configuration type 1. In that case, for example, DMRSs are thinned out at a rate of one in two, and a DMRS is mapped every four subcarriers in one symbol. In addition, for example, DMRSs are preferably thinned out in the DMRS configuration type 2. DMRSs are thinned out at a rate of one pair in two pairs, and a DMRS is mapped every six pairs in one symbol. The thinning interval is not limited to two. Thus, the DMRSs in the frequency axis direction can be decreased.

As another example of (Method 1), the DMRS configuration type may be changed. As described above, there are two types of DMRS configurations, and DMRS densities of respective types are different from each other. Therefore, the DMRSs can be decreased by changing the DMRS configuration type.

As another example of (Method 1), the modulation scheme of the PUSCH transmission may be changed. By changing the modulation scheme from DFT-s-OFDM to OFDM, DMRSs in the frequency axis direction can be decreased.

Specific examples of (Method 2) will be disclosed. There are conventionally two types of symbols to which DMRSs are mapped, i.e., one symbol and two consecutive symbols. For example, in a case where a DMRS is mapped to two symbols, the DMRS may be mapped to one symbol. For example, the DMRS need not be mapped. Moreover, an additional DMRS may be conventionally configured in another symbol in addition to normal DMRSs. For example, the additional DMRS need not be mapped. Thus, the DMRSs in the time axis direction can be decreased. Furthermore, in a case where additional DMRSs are configured, for example, the normal DMRSs need not be mapped, or both the normal DMRSs and the additional DMRSs may be decreased. Thus, it is possible to increase the resources of the PUSCH while ensuring the demodulation accuracy at the end of a slot of the PUSCH.

The DMRSs are preferably decreased depending on the number of repetitions of the PUSCH. The decrease in the DMRSs may be configured for each repeated transmission of the PUSCH. For example, the DMRSs may be configured to be thinned out for each repeated transmission of the PUSCH. For example, the DMRSs to be decreased may be configured for each repeated transmission of the PUSCH. The decrease may be performed on a per RE basis or on a per resource block (RB) basis. For example, the number of DMRS symbols in the time axis direction may be configured for each repeated transmission of the PUSCH. For example, DMRS symbols to be decreased may be configured for each repeated transmission of the PUSCH. The decrease may be performed on a per symbol basis or on a per slot basis.

DMRS configuration type information may be provided as information about the decrease in the DMRSs of the PUSCH. Examples thereof include DMRS configuration type 1 and DMRS configuration type 2.

DMRS thinning information may be provided as the information about the decrease in the DMRSs of the PUSCH. For example, regarding a configuration in which i DMRSs out of h DMRSs are thinned out, h and i are employed as DMRS thinning information. Information for specifying REs in which DMRSs are thinned out may be provided. Information for specifying RBs in which DMRSs are thinned out may be provided. Information indicating that all DMRSs in the frequency axis direction are decreased may be provided. Such information about the configuration of the DMRS of the PUSCH may be included in, for example, the information about resource allocation for the DMRS of the PUSCH. The information about the configuration of the DMRS of the PUSCH may be included in, for example, the DMRS configuration type information.

The modulation scheme information may be provided as the information about the decrease in the DMRSs of the PUSCH. The modulation scheme information is preferably OFDM or DFT-s-OFDM. As another example, the modulation scheme information may be the presence or absence of a transform precoder. If the transform precoder is present, transform precoding is performed, which results in DFT-s-OFDM. If the transform precoder is absent, transform precoding is not performed, which results in OFDM.

The information about resource allocation for the DMRS of the PUSCH may be provided as the information about the decrease in the DMRSs of the PUSCH. For example, DMRS symbol location information in a case where the mapping type of the PUSCH is type A may be provided. Combination with other information makes it possible to configure a flexible decrease in DMRSs.

Information for specifying symbols in which DMRSs are thinned out may be provided. Information for specifying slots in which DMRSs are thinned out may be provided. Information indicating that all DMRSs in the time axis direction are decreased may be provided. Such information about the configuration of the DMRS of the PUSCH may be included in, for example, the information about resource allocation for the DMRS of the PUSCH. For example, the information about the configuration of the DMRS of the PUSCH may be included in DMRS maximum symbol length information, or may be included in the DMRS symbol length information.

The information about the decrease in the DMRSs of the PUSCH is preferably configured depending on the number of repetitions. The information about the decrease in the DMRSs of the PUSCH for each repeated transmission may be configured.

A pattern of DMRSs to be decreased in repeated transmission of the PUSCH may be configured. The pattern may be configured for each of a plurality of repeated transmissions. For example, DMRSs are decreased once in four repeated transmissions of the PUSCH. For example, DMRSs in third and fourth repeated transmissions out of the four repeated transmissions are decreased. The number of repeated transmissions is not limited to four. The pattern of the DMRSs to be decreased may be, for example, an RE pattern or an RB pattern. The pattern of the DMRSs to be decreased may be, for example, a symbol pattern or a slot pattern.

Information on the pattern of the DMRSs to be decreased may be provided as the information about the decrease in the DMRSs of the PUSCH. The information on the pattern of the DMRSs to be decreased may be configured depending on the number of repetitions.

The gNB configures, for the UE, the information about the decrease in the DMRSs in repeated transmission of the PUSCH, which enables the UE to map a different DMRS for each repeated transmission of the PUSCH, and to transmit the PUSCH.

These methods for configuring a decrease in DMRSs may be combined. In that case, the DMRS can be configured flexibly in both the frequency axis direction and the time axis direction in repeated transmission of the PUSCH. With such a method, it is possible to avoid useless DMRS mapping and to avoid an increase in overhead of the DMRS. A decrease in the DMRSs can increase resources to which the PUSCH is mapped by an amount corresponding to the decrease, so that the communication quality of the PUSCH can be improved. As a result, the coverage enhancement of the PUSCH can be achieved.

The information about the decrease in the DMRSs of the PUSCH may be statically determined in a standard or the like. The gNB and the UE can obtain common recognition therebetween. Therefore, the occurrence of malfunction can be reduced.

The gNB may include the information about the decrease in the DMRSs of the PUSCH in the MIB or the SIB and perform the notification of the information. In that case, the configuration can be performed before the UE transitions to an RRC_CONNECTED state with the gNB. The gNB may perform the notification of the information about the decrease in the DMRSs of the PUSCH by cell-common RRC signaling. For example, a parameter for configuring a cell-common uplink DMRS may be provided. For example, the parameter may be included in DMRS-UplinkConfigCommon. Alternatively, the information about the decrease in the DMRSs of the PUSCH may be included in PUSCH-ConfigCommon. Thus, it is possible to perform the notification of the information about the decrease in the DMRSs of the PUSCH at an early stage.

The gNB may perform the notification of the information about the decrease in the DMRSs of the PUSCH by RRC signaling dedicated to the UE. For example, the information about the decrease in the DMRSs of the PUSCH may be included in DMRS-UplinkConfig. Alternatively, the information about the decrease in the DMRSs of the PUSCH may be included in PUSCH-Config. Thus, the information about the decrease in the DMRSs of the PUSCH dedicated to the UE can be configured.

The gNB may dynamically perform the notification of the information about the decrease in the DMRSs of the PUSCH. The information may be provided by MAC signaling. As another method, the information may be included in the DCI and provided on the PDCCH. In that case, notification can be performed only on the PDCCH. Thus, the information about the decrease in the DMRSs of the PUSCH can be dynamically configured. In addition, the information about the decrease in the DMRSs of the PUSCH can be configured at an early stage. Furthermore, the configuration can be performed at an early stage depending on the radio wave propagation environment that fluctuates from moment to moment.

A plurality of candidates for the information about the decrease in the DMRSs of the PUSCH may be statically determined in advance in a standard or the like, and the gNB may notify the UE of the candidates. The plurality of candidates for the information may be prepared as a list (which may be a table). A set of some or all of the pieces of information may be provided and a plurality of candidates may be provided for the set. The gNB may notify the UE of information indicating which candidate to use out of a plurality of candidates for the information. For example, numbers may be assigned to a plurality of listed candidates, and the numbers may be employed as information indicating the candidates.

For example, the gNB may perform the notification of a list of a plurality of candidates for the information by the MIB, the SIB, or RRC signaling, and may include a number indicating which candidate to use in the MAC CE and perform the notification of the number by MAC signaling, or may include the number in the DCI and perform the notification of the number on the PDCCH. Thus, information included in the MAC CE or the DCI can be prevented from increasing.

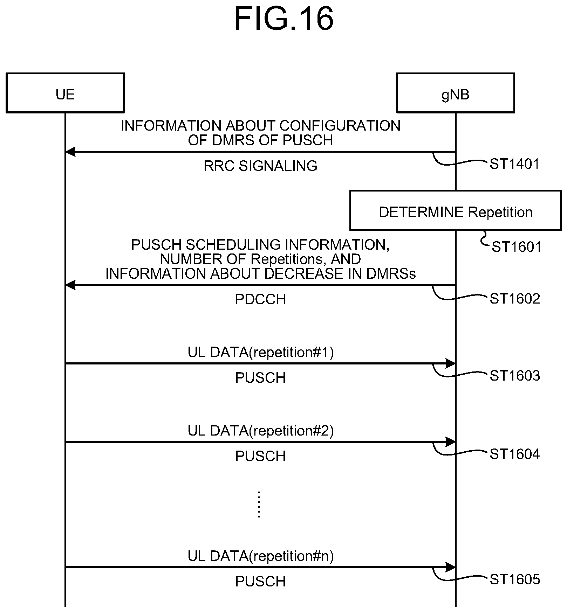

FIG. 16 is a sequence diagram illustrating an example of a method for decreasing DMRSs in PUSCH repeated transmission in the first modification of the first embodiment. In FIG. 16, steps common to those in FIG. 14 used in the description of the first embodiment are denoted by the same step numbers as those therein, and a common description will be omitted. In step ST1601, the gNB determines repeated transmission of the PUSCH for the UE. At that time, the gNB may determine the information about the decrease in the DMRSs in repeated transmission of the PUSCH. In step ST1602, the gNB notifies the UE of scheduling information of the PUSCH by using the PDCCH. In addition, in step ST1602, the gNB notifies the UE of the number of repeated transmissions (the number of repetitions) of the PUSCH and information about the decrease in the DMRSs for each repeated transmission. That is, the gNB notifies the UE of the number of repeated transmissions of the PUSCH and the information about the decrease in the DMRSs for each repeated transmission on the PDCCH together with the scheduling information of the PUSCH, or includes the number of repeated transmissions of the PUSCH and the information about the decrease in the DMRSs for each repeated transmission in the scheduling information of the PUSCH and notifies the UE thereof on the PDCCH.

In steps ST1603 to ST1605, the UE repeatedly transmits the PUSCH by using the information received from the gNB in step ST1602. In each of repeated transmissions of the PUSCH, the UE performs mapping of the DMRS by using the information about the decrease in the DMRSs received from the gNB in step ST1602, and transmits the PUSCH and the DMRS.

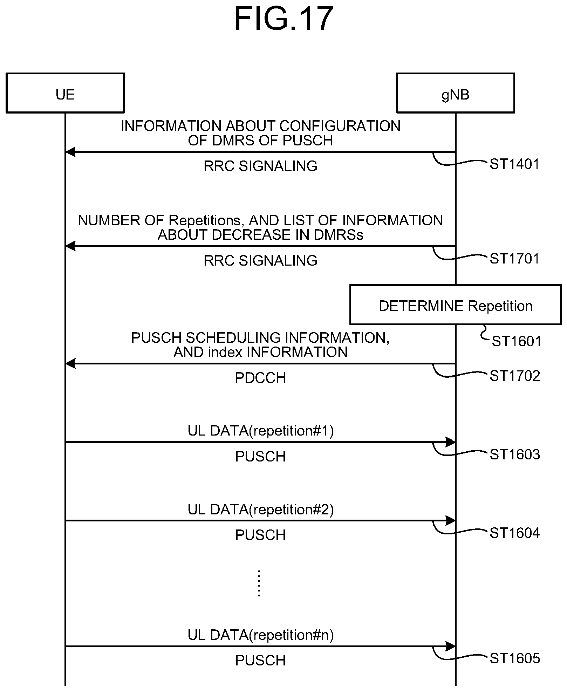

FIG. 17 is a sequence diagram illustrating another example of the method for decreasing DMRSs in PUSCH repeated transmission in the first modification of the first embodiment. In FIG. 17, steps common to those in FIG. 16 are denoted by the same step numbers as those therein, and a common description will be omitted. In step ST1701, the gNB notifies the UE of the number of repeated transmissions of the PUSCH and a list of a plurality of candidates for the information about the decrease in the DMRSs for each repeated transmission (a list of the information about the decrease in the DMRSs). The gNB notifies the UE of these pieces of information by RRC signaling prior to the PUSCH transmission by the UE. For example, in a case where uplink data is generated, in step ST1601, the gNB determines repeated transmission of the PUSCH for the UE. At that time, the gNB may determine the information about the decrease in the DMRSs in repeated transmission of the PUSCH. In step ST1702, the gNB notifies the UE of the scheduling information of the PUSCH by using the PDCCH. In addition, in step ST1702, the gNB notifies the UE of index information indicating which information about the decrease in the DMRSs for each repeated transmission to configure. That is, the gNB notifies the UE of the index information on the PDCCH together with the scheduling information of the PUSCH, or includes the index information in the scheduling information of the PUSCH and notifies the UE thereof on the PDCCH.

With the use of the index information received from the gNB in step ST1702, the UE determines which information about the decrease in the DMRSs to configure from the list of a plurality of candidates for the information about the decrease in the DMRSs for each repeated transmission received from the gNB in step ST1701. In steps ST1603 to ST1605, in each of repeated transmissions of the PUSCH, the UE performs mapping of the DMRS by using the determined information about the decrease in the DMRSs, and transmits the PUSCH and the DMRS.

The PUSCH is preferably mapped to resources in which the DMRSs are decreased. Resources to which the PUSCH is mapped can be increased by an amount corresponding to the decrease in the DMRSs. The UE may determine a transport block (TB) size for PUSCH transmission by using the increased resources of the PUSCH. The data to be transmitted on the PUSCH is preferably rate matched and mapped to the increased resources of the PUSCH. Thus, the communication quality of the PUSCH can be improved.

Thus, the DMRSs can be decreased in repeated transmission of the PUSCH. Therefore, it is possible to prevent overhead due to the DMRS from increasing in repeated transmission of the PUSCH, and resources to which the PUSCH is mapped can be increased by an amount corresponding to the prevention, so that the communication quality of the PUSCH can be improved.

As described in the first embodiment, coverage enhancement in the RA process has been studied. Therefore, the MSG3 may be repeatedly transmitted. A PUSCH including the MSG3 may be repeatedly transmitted. In the present embodiment, repeated transmission of the MSG3 may be repeated transmission of the PUSCH including the MSG3. In the repeated transmission of the MSG3, the method for decreasing DMRSs in PUSCH repeated transmission disclosed above may be appropriately applied.

Information about the decrease in the DMRSs of the PUSCH for the MSG3 may be provided. The information about the decrease in the DMRSs of the PUSCH may be configured depending on the number of repetitions. The information about the decrease in the DMRSs of the PUSCH for each repeated transmission may be configured. The gNB may broadcast the information using the MIB or the SIB. The information may be part of common configuration information of the PUSCH (PUSCH-ConfigCommon). For example, the information may be part of common configuration information of an RACH (RACH-ConfigCommon). Thus, the DMRSs of the PUSCH for the MSG3 and the DMRSs in repeated transmission of the PUSCH for the MSG3 can be decreased suitably for the radio wave propagation environment that differs from cell to cell.

The information about the decrease in the DMRSs of the PUSCH for the MSG3 and/or the information about the decrease in the DMRSs of the PUSCH depending on the number of repetitions may be included in an RAR message and the notification thereof may be performed. Alternatively, the notification may be performed by using the PDCCH for scheduling the RAR message.

For example, the gNB notifies the UE of the information about the decrease in the DMRSs of the PUSCH for the MSG3 and/or the information about the decrease in the DMRSs of the PUSCH depending on the number of repetitions together with the RAR message, or includes the information about the decrease in the DMRSs of the PUSCH for the MSG3 and/or the information about the decrease in the DMRSs of the PUSCH depending on the number of repetitions in the RAR message and notifies the UE thereof. The PDSCH is preferably used for these notifications. For example, the gNB may notify the UE of the information about the decrease in the DMRSs of the PUSCH for the MSG3 and/or the information about the decrease in the DMRSs of the PUSCH depending on the number of repetitions on the PDCCH for scheduling the PDSCH including the RAR message. The gNB may notify the UE of the information together with DCI for scheduling, or may include the information in the DCI and perform the notification thereof.

A repetition type in repeated transmission of the PUSCH including the MSG3 may be configured. The number of repetitions in repeated transmission of the PUSCH including the MSG3 may be configured. The PUSCH repetition type may be applied as the repetition type. The configuration may be statically determined in advance in a standard or the like. Alternatively, as a method for notifying the configuration from the gNB to the UE, the method for performing the notification of the information about the decrease in the DMRSs of the PUSCH for the MSG3 and the information about the decrease in the DMRSs of the PUSCH depending on the number of repetitions disclosed above may be applied. Thus, it is possible to configure repeated transmission of the PUSCH for the MSG3.

Thus, the communication quality of the PUSCH for the MSG3 can be improved.

With the method disclosed in the present modification, the DMRS in repeated transmission of the PUSCH can be configured. Therefore, for example, in a case where the radio wave propagation environment is good, it is possible to increase an RE to which the PUSCH can be mapped by decreasing the DMRSs, and the communication quality of the PUSCH can be improved. For example, in a case where the radio wave propagation environment is poor, it is possible to improve the demodulation accuracy by not decreasing the DMRSs, and the communication quality of the PUSCH can be improved.

In addition, the DMRS can be configured also in repeated transmission of the PUSCH including the MSG3 in the RA process. Consequently, an effect similar to that described above can be obtained.

Thus, coverage enhancement can be achieved.

The first embodiment and the first modification of the first embodiment may be appropriately combined. Repeated transmission can be configured in retransmission of the PUSCH, the DMRS can be configured for each retransmission of the PUSCH, and the decrease in the DMRSs in repeated transmission can be configured for each retransmission of the PUSCH.

The same applies to the PUSCH including the MSG3. In addition, in that case, as another method, the gNB may perform the notification of the information about the decrease in the DMRSs of the PUSCH for the MSG3 and/or the information about the decrease in the DMRSs of the PUSCH depending on the number of repetitions by using the PDCCH for performing scheduling in retransmission of the PUSCH for the MSG3. The pieces of the information may be provided together with DCI for scheduling, or included in the DCI and provided.

Thus, a more flexible configuration can be performed. Therefore, it is possible to perform transmission of the PUSCH suitable for the radio wave propagation environment that changes from moment to moment, and the communication quality of the PUSCH can be improved. Therefore, coverage enhancement can be achieved.

### Second Modification of First Embodiment.

There are two types of repeated transmission of the PUSCH. They are PUSCH repetition type A and type B. In the PUSCH repetition type A, repeated transmission of the PUSCH is configured with the same start symbol and symbol length for each slot. In the PUSCH repetition type B, repeated transmission of the PUSCH is configured not for each slot but for each symbol length of the PUSCH across the slots. However, in a case where the configuration is performed across the slots or a case where symbols are used for other purposes, the symbols of the PUSCH to be actually repeatedly transmitted may be finely segmented at a slot boundary or symbols for other purposes.

In the case of the PUSCH repetition type B, when the symbol to which the PUSCH is mapped is finely segmented, the configuration of the DMRS of the PUSCH configured by the RRC may not be performed. For example, in a case of a configuration in which the symbol length of the PUSCH is four symbols and the DMRS is mapped to the third symbol from the beginning, when the number of symbols is changed to two due to the segment of the PUSCH, the DMRS cannot be mapped in the configuration. In such a case, a process of the DMRS in the UE becomes unclear, and malfunction may occur.

The present modification discloses a method for solving such a problem.

In order to solve the above problem, in a case where a DMRS cannot be mapped due to the segment in repeated transmission of the PUSCH, the DMRS is not mapped in a communication system according to the present modification. The DMRS that cannot be mapped need not be transmitted. For example, in a case where the symbol length of the DMRS is two symbols and only one symbol cannot be mapped, the one symbol of the DMRS that cannot be mapped is not transmitted. Alternatively, both two symbols of the DMRS need not be mapped and both two symbols of the DMRS need not be transmitted. Thus, it is possible to avoid that the process of the DMRS becomes unclear.

In a case where repeated transmission in which no DMRS is transmitted occurs in the repeated transmission of the PUSCH, the gNB preferably demodulates the PUSCH using the DMRS transmitted in another repeated transmission. For example, in a case where the repeated transmission of the PUSCH is performed four times, and repeated transmission numbers 2 and 3 are repeated transmissions in which no DMRS is transmitted, the gNB demodulates the PUSCH transmitted in the repeated transmission numbers 2 and 3 by using the DMRSs of repeated transmission numbers 1 and 4. Thus, the PUSCH can be received.

Another method will be disclosed. In the case of the repeated transmission of the PUSCH repetition type B, the UE maps the DMRS to a beginning symbol and transmits the DMRS, or maps the DMRS to two symbols from the beginning and transmits the DMRS. In all the repeated transmissions, the DMRS may be mapped to a beginning symbol or two symbols from the beginning and transmitted. As another method, only in the repeated transmission in which the DMRS cannot be mapped, the DMRS may be mapped to a beginning symbol or two symbols from the beginning and transmitted. Thus, the DMRS can be transmitted even in a case where the repeated transmission of the PUSCH is finely segmented. Therefore, the gNB can perform demodulation using the DMRS for each repeated transmission of the PUSCH, and can improve the reception quality of the PUSCH.

In the case of the repeated transmission of the PUSCH repetition type B, a PUSCH mapping type B may be configured. In the PUSCH mapping type B, the DMRS is mapped to a beginning symbol or two symbols from the beginning and transmitted. In that case, an effect similar to that in the method disclosed above can be obtained.

The above method is preferably applied also in a case where the additional DMRS is mapped as the DMRS in addition to the normal DMRS. Alternatively, in the case of the repeated transmission of the PUSCH repetition type B, the additional DMRS need not be mapped and need not be transmitted. Thus, it is possible to avoid that the process of the DMRS becomes unclear also in a case where the additional DMRS is configured.

A method for configuring the DMRS in repeated transmission of the PUSCH may be statically determined in advance in a standard or the like. The UE and the gNB can obtain common recognition therebetween. The occurrence of malfunction in a repeated transmission process of the PUSCH can be reduced. The gNB may perform the notification of the configuration method by the MIB, the SIB, or RRC signaling. In that case, the configuration method can be changed semi-statically. The gNB may include the configuration method in the MAC CE and perform the notification of the configuration method by MAC signaling, or may include the configuration method in the DCI and perform the notification of the configuration method on the PDCCH. In that case, the configuration method can be changed dynamically.

The method for decreasing DMRSs in PUSCH repeated transmission disclosed in the first modification of the first embodiment may be appropriately applied. For example, the DMRS configuration information in the method disclosed above is preferably employed as the information about the decrease in the DMRSs in step ST1602 in FIG. 16. For example, PUSCH mapping type B is preferably configured as a configuration for each repeated transmission of the PUSCH. In addition, the additional DMRS may be configured so that there is no additional DMRS. Thus, even in a case where a symbol to which the PUSCH is mapped is finely segmented in the PUSCH repetition type B, the DMRS can be dynamically and flexibly configured.

With the method disclosed in the present modification, even in a case where a symbol to which the PUSCH is mapped is finely segmented in the repeated transmission of the PUSCH, it is possible to eliminate mapping misalignments of the DMRS. Therefore, the occurrence of malfunction in a repeated transmission process of the PUSCH can be reduced. In addition, for example, even in a case where the DMRS is not transmitted, the gNB can receive the PUSCH, and the reception quality of the PUSCH in the gNB can be improved by mapping the DMRS to a beginning symbol, for example. Therefore, the coverage enhancement of the PUSCH can be achieved.

### Third Modification of First Embodiment.

In a case where the number of uplink retransmissions from the UE to the gNB is increased, it may be better to improve reception quality in the gNB by repeated transmission than by a retransmission process that needs a downlink reception process. Depending on the situation of the UE, for example, in a case where the amount of remaining battery power of the UE is low, it is better to improve the reception quality in the gNB by repeatedly transmitting the PUSCH rather than consuming power in a reception process of the PDCCH including the scheduling information for PUSCH retransmission. For example, in a case where a low latency is required for an application executed by the UE, it is better to enable the gNB to be notified in a short period of time by repeated transmission of the PUSCH rather than to take time by retransmission of the PUSCH.

However, the gNB cannot recognize such a situation of the UE, and cannot configure the repeated transmission of the PUSCH depending on the situation of the UE.

The present modification discloses a method for solving such a problem.

In order to solve the above problem, in the communication system according to the present modification, the UE requests the gNB to configure repeated transmission of the PUSCH. The UE may notify the gNB of information indicating the request. The UE may notify the gNB of the information indicating the request by RRC signaling. For example, in a case where the UE receives the information about the configuration of the DMRS of the PUSCH from the gNB, the UE may notify the gNB of the information indicating the request by RRC signaling. By receiving the information indicating the request from the UE, the gNB can determine, for the UE, the configuration of the repeated transmission of the PUSCH.

In addition, the UE may notify the gNB of the information indicating the request by MAC signaling or on the PUCCH. Thus, the notification can be performed dynamically. For example, the UE may include the information indicating the request in an SR and notify the gNB of the information. The UE may include the information indicating the request in an uplink scheduling request and notify the NB of the information. By the notification of the information indicating the request included in the uplink scheduling request, when the gNB receives the scheduling request, the gNB can determine the configuration of the repeated transmission of the PUSCH for the scheduling request.

In addition, the UE may include the information indicating the request in a buffer status report (BSR) and notify the gNB of the information. By the notification of the information indicating the request included in the BSR, when the gNB receives the BSR, the gNB can determine the configuration of the repeated transmission of the PUSCH for the BSR.

Furthermore, the UE may include the information indicating the request in Ack/Nack information of the PDSCH and notify the gNB of the information. For example, in a case where retransmission of the PDSCH frequently occurs, the UE includes the information indicating the request in the Ack/Nack information of the PDSCH and notifies the gNB of the information. In a case where the downlink communication quality and the uplink communication quality are related to each other, there may be a higher probability of frequent retransmission of the PUSCH. In such a case, by the UE including the information indicating the request in the Ack/Nack information of the PDSCH and notifying the gNB of the information, when the gNB receives the Ack/Nack information, the gNB can determine the configuration of the repeated transmission of the PUSCH.

In addition, the UE may notify the gNB of the information indicating the request in association with the PRACH. For example, in a case where the request is indicated, a predetermined PRACH configuration may be used. For example, the UE may notify the gNB of the information indicating the request on an MSGA PUSCH. In 2-step RACH, the MSGA PUSCH is transmitted together with the PRACH. When the gNB receives the PRACH or the MSGA PUSCH, the gNB can determine the configuration of the repeated transmission of the PUSCH. Thus, the gNB can determine the configuration of the repeated transmission of the PUSCH at an early stage. In addition, the gNB can determine the configuration of the repeated transmission of the PUSCH for transmitting the MSG3 in the RA process.

For example, the UE may include the information indicating the request in the MSG3 in the RA process and notify the gNB of the information. In that case, when the gNB receives the MSG3, the gNB can determine the configuration of the repeated transmission of the PUSCH. Thus, the gNB can determine, for the UE, the configuration of the repeated transmission of the PUSCH at an early stage. For example, the configuration of the repeated transmission of the PUSCH occurring in and after the MSG3 can be determined.

A specific example of a method will be disclosed in which the UE determines to notify the gNB of the information indicating the request. For example, in a case where the amount of remaining battery power of the UE falls below a predetermined threshold, the information indicating the request may be notified to the gNB. As an example of the amount of remaining battery power, a percentage with respect to the battery capacity, the remaining battery capacity, or the remaining operation time may be employed. For example, in a case where the number of receptions of Nack or the number of receptions of PUSCH retransmission scheduling information with respect to PUSCH transmission exceeds a predetermined threshold, the UE may notify the gNB of the information indicating the request. The predetermined threshold may be statically determined in advance in a standard or the like, or may be notified from the gNB to the UE. The predetermined threshold may be notified from the gNB to the UE using the MIB or the SIB, or may be notified from the gNB to the UE by RRC signaling dedicated to the UE. In addition, the predetermined threshold may be notified from the gNB to the UE by MAC signaling or on the PDCCH. In that case, the predetermined threshold can be dynamically configured. Thus, the UE can determine whether to notify the gNB of the information indicating the request. In addition, the gNB can determine the content of the configuration of the repeated transmission of the PUSCH performed for the UE. The content of the configuration of the repeated transmission the PUSCH includes whether to cause the UE to perform the repeated transmission of the PUSCH, and the number of repeated transmissions in a case where the UE is caused to perform the repeated transmission of the PUSCH.

The process related to the amount of remaining battery power of the UE described above may be configured as a measurement event. The gNB may notify the UE of a measurement configuration including the measurement event. In a case where the measurement event is satisfied, the UE may notify the gNB of a measurement report. Thus, the gNB can recognize the amount of remaining battery power of the UE.

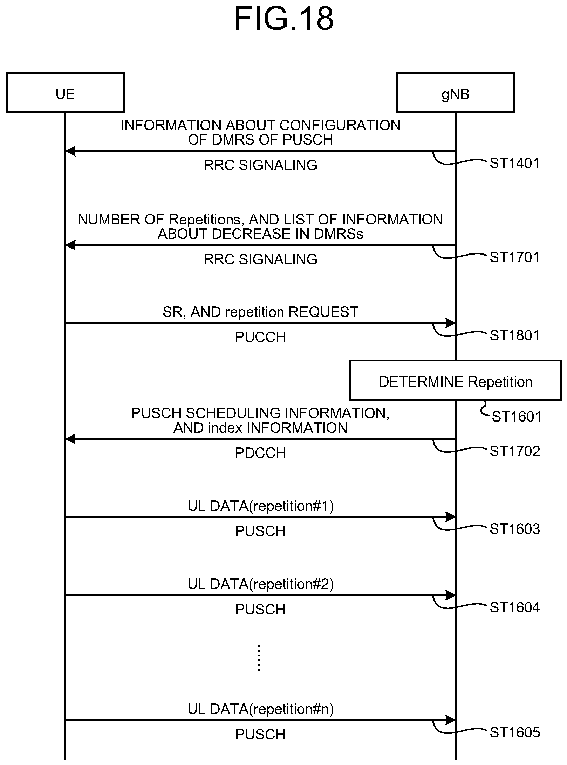

FIG. 18 is a sequence diagram illustrating an example of a method in which the UE requests the gNB to configure PUSCH repeated transmission in the third modification of the first embodiment. In FIG. 18, steps common to those in FIG. 17 used in the description of the first modification of the first embodiment are denoted by the same step numbers as those therein, and a common description will be omitted. In step ST1801, the UE notifies the gNB of information indicating a request for the configuration of the repeated transmission of the PUSCH. The UE notifies the gNB of the information by using the PUCCH. The information may be included in the SR and notified to the gNB. Thus, the gNB can determine, for the UE, the content of the configuration of the repeated transmission of the PUSCH.

With the use of the information indicating the request for the configuration of the repeated transmission of the PUSCH received in step ST1801, the gNB determines the content of the configuration of the repeated transmission of the PUSCH to be performed for the UE in step ST1601. The example in FIG. 18 illustrates a case of using information about the decrease in the DMRSs (index information), but there is no limitation thereto. For example, the gNB need not configure the information about the decrease in the DMRSs, but may configure only the repeated transmission of the PUSCH for the UE, and may perform the notification thereof in step ST1702.

With the method disclosed in the present modification, the gNB can recognize the necessity of the configuration of the repeated transmission of the PUSCH for the UE. That is, the gNB can configure the repeated transmission of the PUSCH depending on the situation of the UE. Therefore, the communication quality of the PUSCH can be improved. That is, the coverage enhancement of the PUSCH can be achieved. In addition, it is possible to notify the gNB of the PUSCH in a short period of time. Therefore, communication suitable for a service requiring a low latency can be performed.

### Second Embodiment.

In NR, coverage enhancement in initial access, for example, coverage enhancement in an SS block (SSB) or coverage enhancement in an RA process has been studied. In the RA process, a beam for transmitting the SSB and a beam for receiving the PRACH from the UE are used in the gNB. Since a wide beam having a relatively wide beam width is used for these beams, the wide beam is also used in the RA process. In a case of the wide beam, there is a problem in that a wide coverage cannot be obtained.

The present embodiment discloses a method for solving such a problem.

In the present embodiment, the above problem is solved by making the number of symbols constituting the PBCH different from conventional ones. For example, the SS and the PBCH are not configured in the same symbol. The number of symbols of the PBCH in the SSB may be made different from conventional ones. A frequency domain of the PBCH may be made different from conventional ones. The number of symbols of the SSB may be increased.

In addition, in the present embodiment, the above problem is solved by repeatedly transmitting the PBCH. For example, the PBCH is repeatedly transmitted for each symbol. The PBCH may be transmitted a plurality of times for each symbol and transmitted on different beams for each symbol. Different beams may be used for transmission of the SS and transmission of the PBCH. The PBCH may be transmitted a plurality of times on a narrow beam. The SS may be transmitted on a wide beam, and the PBCH may be transmitted on a narrow beam.

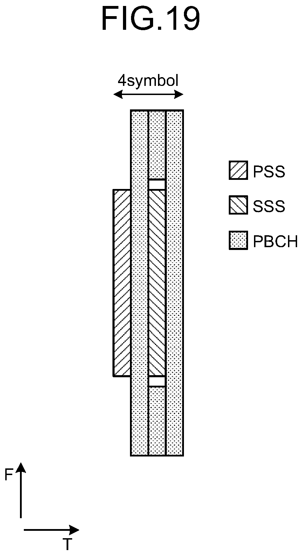

FIG. 19 is a diagram illustrating a configuration of a conventional SSB. The conventional SSB includes four symbols, SSs (primary synchronization signal (PSS) and secondary synchronization signal (SSS)) are configured in a first symbol and a third symbol, and a PBCH is configured in second to fourth symbols.

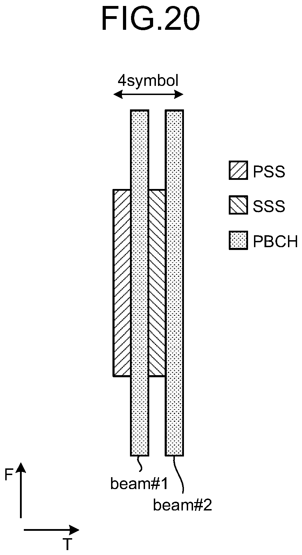

FIG. 20 is a diagram illustrating an example in which the number of symbols of a PBCH in an SSB is increased in the second embodiment. In the example illustrated in FIG. 20, the SSB includes four symbols. In addition, SSs (PSS and SSS) are mapped to a first symbol and a third symbol, and the PBCH is mapped to a second symbol and a fourth symbol. In the conventional SSB illustrated in FIG. 19, the PBCH is also mapped to the third symbol, but in the present embodiment, the PBCH is not mapped to the third symbol. That is, the SS and the PBCH are not mapped to the same symbol. Thus, the SS and the PBCH can be transmitted on different beams.

The PBCH is transmitted twice by using the second symbol and the fourth symbol. It is preferable to perform transmission using a beam different for each transmission of the PBCH. Thus, the PBCH can be transmitted using a narrow beam. Resources in the frequency axis direction of the PBCH may be made different from conventional ones. The resources in the frequency axis direction of the PBCH may be increased. Thus, it is possible to ensure a resource capacity necessary for mapping one PBCH.

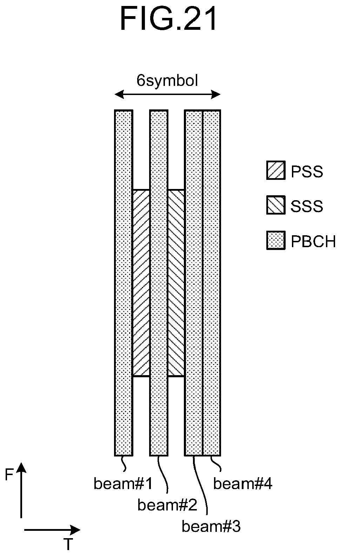

FIG. 21 is a diagram illustrating another example in which the number of symbols of the PBCH in the SSB is increased in the second embodiment. In the example illustrated in FIG. 21, the SSB includes six symbols. In addition, the SSs (PSS and SSS) are mapped to a second symbol and a fourth symbol, and the PBCH is mapped to first, third, fifth, and sixth symbols. The SS and the PBCH are not mapped to the same symbol. Thus, the SS and the PBCH can be transmitted on different beams.

In the example illustrated in FIG. 21, the PBCH is transmitted four times by using the first, third, fifth, and sixth symbols. It is preferable to perform transmission using a beam different for each transmission of the PBCH. Thus, the PBCH can be transmitted using a narrow beam having a narrower beam width than the narrow beam used in the example illustrated in FIG. 20. Resources in the frequency axis direction of the PBCH may be made different from conventional ones. The resources in the frequency axis direction of the PBCH may be increased. Thus, it is possible to ensure a resource capacity necessary for mapping one PBCH.

An identifier of a beam for transmitting the PBCH may be provided. Hereinafter, the identifier may be referred to as a PBCH beam identifier. A beam identifier corresponding to the SSB has been conventionally provided, but in the present embodiment, a beam identifier corresponding to the PBCH (PBCH beam identifier) is provided. Thus, in a case where the gNB transmits the PBCH a plurality of times on different beams, the UE can identify each beam on which the PBCH is transmitted.

The PBCH beam identifier may be associated with one or a plurality of PRACH configurations. The PRACH configuration may be listed. The PRACH configuration may include resources on the time axis and/or the frequency axis for transmitting the PRACH. The PBCH beam identifier may be associated with one or a plurality of PRACH preambles. These associations may be statically determined in advance in a standard or the like. As another method, the gNB may include these associations in the MIB or the SIB and perform the notification of the associations. Thus, the UE can perform the RA process.

The UE receives PBCHs transmitted on different beams, and, for example, specifies a beam identifier of each of the received PBCHs. The UE may specify, as a PBCH beam, a beam used to receive a PBCH whose reception quality is equal to or greater than a predetermined threshold. A beam used to receive a PBCH, the PBCH having obtained the reception quality equal to or greater than the predetermined threshold at the earliest, may be employed as the PBCH beam. The predetermined threshold may be statically determined in advance in a standard or the like. As another method, the UE may receive PBCHs on all beams to be transmitted a plurality of times, and specify a beam identifier of a PBCH with the best reception quality. Thus, the UE can specify the beam of the PBCH. The reception quality in the present disclosure may be received power or a signal interference noise ratio. For example, the reception quality of a DMRS may be measured. For example, another RS (for example, a channel state measurement RS) may be provided in the PBCH to measure the reception quality of the RS.

The UE selects a PRACH configuration corresponding to the specified PBCH beam. The UE may select a PRACH preamble corresponding to the specified PBCH beam. The UE preferably transmits the PRACH using the PRACH configuration and/or a PRACH preamble corresponding to the specified beam.

With the use of the PRACH configuration and/or the PRACH preamble received from the UE, the gNB specifies a reception beam corresponding to the PBCH beam specified by the UE. The gNB may use a transmission beam and a reception beam optimum for the UE in subsequent processes. Thus, the gNB can specify the optimum transmission beam and reception beam for the UE. For example, by using a narrow beam for transmission of the PBCH, coverage enhancement can be achieved.

With such a method, a narrow beam can be used from reception of the PBCH to the RA process, and a wide coverage can be obtained.

Another method for solving the problem described above will be disclosed.

In another solving method, the number of SSBs is increased within one SS burst. The number of SSBs may be increased within 5 ms. For example, in a case where a carrier frequency band is higher than 3 GHz and equal to or lower than 6 GHz and an SCS is 30 kHz, while eight SSBs can be conventionally configured, 16 SSBs can be configured. An integer multiple of 5 ms may be employed as an SS burst period. Consequently, more SSBs can be configured in the SS burst. The UE preferably receives SSBs at an interval of an integer multiple of 5 ms. For example, even in a case where the carrier frequency band is as high as 6 GHz or higher, a large number of SSBs can be configured. Thus, the gNB can transmit more SSBs. Therefore, SSBs can be each transmitted using a narrow beam as compared with conventional ones.

The number of SSBs may be increased within one SSB repetition period. For example, in a case where a carrier frequency band is equal to or higher than 6 GHz, an SCS is 120 kHz, and one SSB repetition period is 20 ms, while 64 SSBs can be conventionally configured, 128 SSBs can be configured. Thus, the gNB can transmit more SSBs. Therefore, SSBs can be each transmitted using a narrow beam as compared with conventional ones.

The beam identifier is preferably allocated to the SSB similarly to conventional cases. The beam identifier is preferably associated with one or a plurality of PRACH configurations. The UE preferably selects a PRACH configuration corresponding to a specified beam for the SSB and transmits the PRACH. By using a narrow beam for the SSB, the gNB can perform transmission and reception using an optimum narrow beam for the UE also in the RA process after the PRACH.

With such a method, a narrow beam can be used in the SSB and the RA process, and a wide coverage can be obtained.

Another method of coverage enhancement of the SSB will be disclosed.

In another method of coverage enhancement, an SSB of the same beam is repeatedly transmitted. The SSB of the same beam may be repeatedly transmitted within one SS burst. The SSB of the same beam may be repeatedly transmitted within 5 ms. The SSB of the same beam may be repeatedly transmitted within one SSB repetition period. Beam identifiers of the SSB of the same beam to be repeatedly transmitted are preferably the same.

The period during which the SSB of the same beam is repeatedly transmitted may be statically determined in advance in a standard or the like. The UE receives the SSB during the period. By receiving the SSB of the same beam a plurality of times, the reception quality of the SSB can be improved.

With such a method, the reception quality of the SSB can be improved, and the coverage enhancement of the SSB can be achieved.

### First Modification of Second Embodiment.

Similarly to the second embodiment described above, the present modification discloses a method for solving the problem that a wide beam is used in the RA process and thus a wide coverage cannot be obtained.

In the present modification, the above problem is solved by transmitting the RAR a plurality of times. The RAR includes scheduling information of the PDSCH transmitted on the PDCCH and an RAR message transmitted on the PDSCH. In order to solve the above problem, the PDCCH for the RAR is preferably transmitted a plurality of times. In the present modification, the RAR is transmitted a plurality of times using different beams. More specifically, the PDCCH for the RAR is transmitted a plurality of times using different beams. For example, a beam for transmitting the PDCCH for the RAR may be a narrow beam. Thus, the coverage enhancement of the PDCCH for the RAR can be achieved.

The gNB may transmit different narrow beams a plurality of times within a range of the beam specified by the UE that has received the SSB. The gNB may transmit different narrow beams a plurality of times so that the range of the beam specified by the UE that has received the SSB is included. Even if a wide beam is used for transmission of the SSB, the PDCCH for the RAR is preferably transmitted on a narrow beam. Thus, the coverage of the PDCCH for the RAR can be enhanced while including the coverage of the SSB.

In addition, in the present modification, an RAR window that receives the RAR transmitted a plurality of times is provided. A duration of a conventional RAR window may be extended. A maximum duration of the conventional RAR window is 80 slots. A duration of the RAR window may be longer than 80 slots. The duration of the RAR window may be continuous or discontinuous. The duration of the RAR window may be configured depending on the number of transmissions of the RAR. The gNB transmits the PDCCH for the RAR for a plurality of times within the RAR window duration.

The RAR window duration may be statically determined in a standard or the like. The number of transmissions of the PDCCH for the RAR may be associated with the RAR window duration. The associations may be listed. An index may be assigned to each association. The gNB may notify the UE of the RAR window duration using the MIB or the SIB. The above may be notified to the UE by using an SIB 1. The above may be notified to the UE as information other than the MIB of the PBCH.

The gNB may notify the UE of the number of transmissions of the PDCCH for the RAR. The UE that has received the notification preferably derives the RAR window duration using, for example, a list determined in a standard. The gNB may notify the UE of an index of an association of the number of transmissions of the PDCCH for the RAR with the RAR window duration. The UE that has received the notification preferably derives the RAR window duration using, for example, a list determined in a standard.

The UE receives the PDCCH for the RAR within a range of the RAR window. The UE may receive the PDCCH for the RAR a plurality of times. Thus, the UE can receive the PDCCH for the RAR to be transmitted a plurality of times.

The gNB notifies the UE of the scheduling information of the PDSCH including the RAR message on the PDCCH for the RAR of each beam. The scheduling information may be included in the DCI and notified to the UE on the PDCCH. The number of resources of the PDSCH of the RAR message is preferably one. By using one resource, resource usage efficiency can be improved. The scheduling information notified to the UE on the PDCCH for the RAR of each beam is information indicating the same resource. In a case where a narrow beam to be transmitted to the UE has not been specified yet, the gNB may use a wide beam for transmission of the PDSCH including the RAR message. Thus, the UE can receive the RAR message.

The gNB includes the beam identifier of each beam in the DCI of the PDCCH for the RAR. A sequence using the beam identifier for the DMRS of the PDCCH for the RAR of each beam may be used. These may be combined. Thus, the UE that has received the PDCCH for the RAR can specify a beam on which the PDCCH for the RAR is transmitted.

The gNB includes scheduling information of the MSG3 of the RA process in the RAR message scheduled using the PDCCH for the RAR. Thus, the UE can receive the RAR message by using the scheduling information of the PDCCH for the RAR, and can obtain the scheduling information of the MSG3 to be transmitted to the gNB.

The UE measures the reception quality of the PDCCH for the RAR of each beam. The UE may measure the reception quality of the RS of the PDCCH for the RAR of each beam. For example, the reception quality of a DMRS may be measured. For example, another RS (for example, a channel state measurement RS) may be provided in the PDCCH to measure the reception quality of the RS. L1-RSRP may be measured as the reception quality. The UE may store reception quality information of each beam. The UE may specify a beam having the best reception quality in the PDCCH for the RAR transmitted a plurality of times. The UE may store an identifier of the beam having the best reception quality.

In addition, the UE receives the RAR message (MSG2) by using the scheduling information of the PDCCH for the RAR. Furthermore, the UE transmits the MSG3 by using the scheduling information of the MSG3 included in the RAR message. The MSG3 may include reception quality information of each beam for transmitting the PDCCH for the RAR and/or the identifier of the beam having the best reception quality. The reception quality information of each beam may be associated with a beam identifier. The reception quality information of each beam may be listed. The MSG3 may include, as the reception quality information of each beam, reception quality information of top n (n is an integer of 1 or more) beams having good reception quality. Thus, the UE can notify the gNB of the reception quality of the PDCCH for the RAR transmitted by the gNB or the beam having the best reception quality.

The UE may measure the reception quality of the PDCCH for the RAR of each beam, and in a case where a predetermined threshold is exceeded, the UE need not receive the PDCCH for the RAR thereafter. That is, the UE specifies a beam exceeding the predetermined threshold. The predetermined threshold and a value of n described above may be statically determined in advance in a standard or the like. Alternatively, the predetermined threshold and the value of n may be notified from the gNB to the UE in advance. For example, the predetermined threshold and the value of n may be included in the MIB or the SIB and notified to the UE.

The UE receives the RAR message by using the scheduling information of the PDCCH for the RAR transmitted on the beam exceeding the predetermined threshold. The UE transmits the MSG3 by using the scheduling information of the MSG3 included in the RAR message. The MSG3 may include reception quality information of the beam exceeding the predetermined threshold and/or an identifier of the beam exceeding the predetermined threshold. The MSG3 may include reception quality information of top n beams having good reception quality exceeding the predetermined threshold and/or identifiers of the top n beams having good reception quality exceeding the predetermined threshold. Thus, the UE can notify the gNB of a beam having reception quality exceeding the predetermined threshold.

The gNB may use a wide beam to receive the MSG3 transmitted from the UE. The gNB can specify a beam used for transmission to the UE by receiving the MSG3 from the UE, and using the reception quality information of each beam and/or the identifier of the beam having the best reception quality. For example, the beam having the best reception quality is employed as the beam used for transmission to the UE. The gNB preferably transmits the MSG4 of the RA process to the UE by using the specified beam.

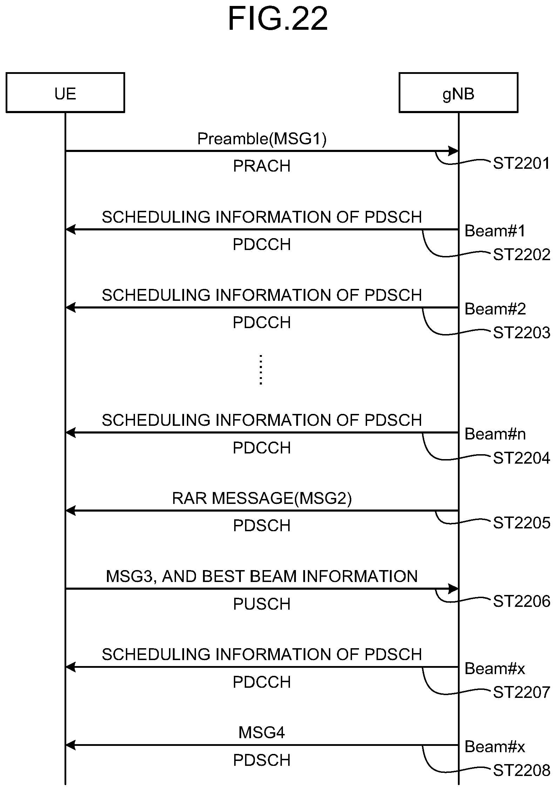

FIG. 22 is a sequence diagram illustrating an example of a method for transmitting the PDCCH for the RAR a plurality of times using different beams in the RA process in the first modification of the second embodiment. In order to start accessing the gNB, the UE transmits the PRACH to the gNB in step ST2201. More specifically, the UE transmits, as the MSG1, a PRACH preamble to the gNB. The PRACH is transmitted with a configuration corresponding to an SSB received by the UE. Consequently, the gNB can recognize which SSB the UE has received.

The gNB that has received the PRACH transmits the PDCCH for the RAR in steps ST2202 to ST2204. The gNB transmits the PDCCH for the RAR a plurality of times using different beams. The PDCCH for the RAR transmitted by the gNB includes the scheduling information of the PDSCH including the RAR message. The scheduling information provided on the PDCCH for the RAR of each beam includes information indicating the same resource.

A beam for transmitting the PDCCH for the RAR may be different from the beam for the SSB received by the UE. Beams for transmitting a plurality of PDCCHs for RARs are configured to cover the beam for the SSB received by the UE. By performing the transmission of the PDCCH for the RAR a plurality of times as described above, a narrow beam can be used for the transmission of the PDCCH for the RAR.

The PDCCH for the RAR illustrated in each of steps ST2202 to ST2204 is transmitted within the RAR window duration. The UE receives the PDCCH for the RAR transmitted in each of steps ST2202 to ST2204. The UE preferably performs the reception within the RAR window duration. The RAR window duration may be that obtained by extending a conventional RAR window duration. The plurality of PDCCHs for RARs can be transmitted and received. A CRC of the DCI of the PDCCH for the RAR is scrambled by a random access-radio network temporary identifier (RA-RNTI), and the UE can receive the PDCCH for the RAR by using the RA-RNTI.

The UE receives the PDCCH for the RAR transmitted in each of steps ST2202 to ST2204, measures the reception quality of each beam, and specifies a beam having the best reception quality.

In step ST2205, the gNB transmits the PDSCH including the RAR message which is the MSG2 on one beam in accordance with the scheduling information transmitted on the PDCCH for the RAR. The beam may be a wide beam. The same beam as that for the transmission of the SSB is preferably used. In step ST2205, the UE receives the PDSCH in accordance with the scheduling information received on the PDCCH for the RAR, and receives the RAR message. The RAR message which is the MSG2 includes the scheduling information of the MSG3.

In step ST2206, the UE transmits the PUSCH including the MSG3 by using the scheduling information of the MSG3 included in the received RAR message. The MSG3 may include best beam information of the PDCCH received in each of steps ST2202 to ST2204. As the best beam information, a beam identifier may be included. In step ST2206, the gNB receives the PUSCH including the MSG3 from the UE in accordance with the scheduling information of the MSG3 included in the RAR message. A beam for receiving the PUSCH may be a wide beam. A reception beam corresponding to the transmission beam of the RAR message or the transmission beam of the SSB is preferably used.

In step ST2206, the gNB that has received the PUSCH including the MSG3 acquires the MSG3 and acquires the best beam information of the PDCCH, and thereby it is possible to recognize an optimum beam for the UE among the beams transmitted in steps ST2202 to ST2204.

In step ST2207, the gNB notifies the UE of scheduling information of the PDSCH including the MSG4 on the PDCCH. As the transmission beam, the best beam indicated by the best beam information received in step ST2206 is preferably used. In step ST2208, the gNB transmits the PDSCH including the MSG4 to the UE in accordance with the scheduling information of the PDSCH including the MSG4. Similarly, as the transmission beam, the best beam indicated by the best beam information received in step ST2206 is preferably used. Thus, the gNB can use an optimum narrow beam for the UE from the transmission of the scheduling information of the MSG4 and that of the MSG4.

In step ST2207, the UE receives the PDCCH including the scheduling information of the PDSCH including the MSG4, receives the PDSCH in step ST2208 by using the scheduling information, and acquires the MSG4. Thus, the RA process can be performed. In addition, the gNB can use a narrow beam for the UE in the process of the MSG4 and subsequent processes.

With the method disclosed in the present modification, the gNB can transmit the PDCCH for the RAR on a narrow beam. The gNB can specify a narrow beam having the best reception quality in the UE by receiving the MSG3. Therefore, it is possible to use an optimum narrow beam for the UE for transmission and reception of the MSG4 and subsequent transmissions and receptions, which enables coverage enhancement to be achieved.

### Second Modification of Second Embodiment.

Similarly to the first modification of the second embodiment described above, the present modification discloses another method for solving the problem that a wide beam is used in the RA process and thus a wide coverage cannot be obtained.

In the present modification, the above problem is solved by transmitting the RAR a plurality of times similarly to the first modification described above, but the details of the RAR transmission operation are different therefrom. In order to solve the above problem, the PDSCH including the RAR message is preferably transmitted a plurality of times. Also in the present modification, the RAR is transmitted a plurality of times using different beams. More specifically, the PDSCH including the RAR message is transmitted a plurality of times using different beams. For example, a beam for transmitting the PDSCH including the RAR message may be a narrow beam. Thus, the coverage enhancement of the PDSCH including the RAR message can be achieved.

The gNB may transmit different narrow beams a plurality of times within a range of the beam specified by the UE that has received the SSB. The gNB may transmit different narrow beams a plurality of times so that the range of the beam specified by the UE that has received the SSB is included. Even if a wide beam is used for transmission of the SSB and the PDCCH for the RAR, the PDSCH including the RAR message is preferably transmitted on a narrow beam. Thus, the coverage of the PDSCH including the RAR message can be enhanced while including the coverage of the SSB.

The transmission of the PDCCH for the RAR does not need to be performed a plurality of times. Therefore, a conventional method may be applied to the RAR window.

The number of transmissions of the PDSCH including the RAR message may be statically determined in a standard or the like. The gNB may perform the notification of the number of transmissions of the PDSCH including the RAR message. The gNB may perform the notification of the number of transmissions of the PDSCH including the RAR message using the MIB or the SIB. The above may be notified to the UE by using an SIB 1. The above may be notified to the UE as information other than the MIB of the PBCH. The gNB may notify the UE of the number of transmissions of the PDSCH including the RAR message on the PDCCH for the RAR. The above may be notified to the UE together with the scheduling information of the PDSCH including the RAR message, or may be included in the information and notified to the UE. Thus, the UE can recognize the number of transmissions of the PDSCH including the RAR message.

The gNB notifies the UE of the scheduling information of the PDSCH including the RAR message for a plurality of times on the PDCCH for the RAR. The scheduling information may be included in the DCI and notified to the UE on the PDCCH. Pieces of the scheduling information of the PDSCHs including respective RAR messages may be different. Regarding the pieces of the scheduling information of the PDSCHs including respective RAR messages, resource allocations on the time axis may be different. Thus, the PDSCH including the RAR message can be transmitted a plurality of times using different beams. A narrow beam may be used for each beam.

The DCI included in the PDCCH for the RAR may include an identifier of a beam on which the RAR message is transmitted. The scheduling information of the PDSCH including the RAR message of each beam may include an identifier of the beam. As another method, the identifier of the beam may be included in the RAR message. A sequence using the beam identifier for the DMRS of the PDSCH including the RAR message of each beam may be used. These may be combined. Thus, the UE that has received the PDSCH including an RAR message can specify a beam on which the PDSCH including the RAR message is transmitted.

The gNB includes scheduling information of the MSG3 of the RA process in the RAR message of each beam. The information included in the RAR message may be scheduling information for each beam for transmitting the MSG3. The information may be scheduling information for each beam for receiving the MSG3. The information may be scheduling information of the MSG3 for each beam identifier disclosed above. Resource allocation information may be included as the scheduling information of the MSG3. The resource allocation information may be information on resource allocation on the time axis and/or the frequency axis.

The resource allocations on the time axis for the MSG3 in the RAR messages of respective beams may be the same. The resource allocations on the time axis for the MSG3 may be each indicated by an offset from a reception timing of the PDSCH including the RAR message or a PDSCH for scheduling the PDSCH. Thus, even if the offsets are configured to be the same, transmission timings of the MSG3 are different. Therefore, the UE can transmit the MSG3 on different beams and/or the gNB can receive the MSG3 on different beams.

The resource allocations on the time axis for the MSG3 in the RAR messages of respective beams may be different. In that case, the transmission timings of the MSG3 are preferably configured to be different. Thus, the UE can transmit the MSG3 on different beams and/or the gNB can receive the MSG3 on different beams.

Resource allocations on the frequency axis for the MSG3 in the RAR messages of respective beams may be the same or may be different. In a case of the same resource allocation, transmission and reception processes in the UE and the gNB can be more easily performed.

As the scheduling information of the MSG3, an offset value (which may be, for example, Kbeam) for each beam may be provided. The Kbeam may be statically determined in a standard or the like. The Kbeam may be provided by the gNB using the MIB or the SIB. The Kbeam may be provided by the gNB by RRC signaling. The Kbeam may be included in the RAR message and provided by the gNB.

An offset for each beam is preferably obtained by adding offset information (Kbeam) for each beam to information on the offset from the reception timing of the PDSCH including the RAR message or a PDSCH for scheduling the PDSCH. Thus, even if the offsets are configured to be the same, the transmission timings of the MSG3 are different. Therefore, the UE can transmit the MSG3 on different beams and/or the gNB can receive the MSG3 on different beams.

A plurality of pieces of scheduling information of the MSG3 may be provided and listed. A plurality of pieces of resource allocation information of the MSG3 may be provided and listed. An index may be assigned to the list. The list of the scheduling information of the MSG3 may be statically determined in advance in a standard or the like. The gNB may perform the notification of the list of the scheduling information of the MSG3 using the MIB or the SIB. The gNB may perform the notification of the list of the scheduling information of the MSG3 by RRC signaling.

The gNB may include an index indicating the scheduling information of the MSG3 in the RAR message of each beam and perform the notification of the index. Thus, the amount of information in the RAR message can be decreased. In addition, the resources of the PDSCH including the RAR message to be transmitted a plurality of times can be reduced. Furthermore, resource usage efficiency can be improved.

Since the scheduling information of the MSG3 is corresponding to the RAR message of each beam, the list may need many pieces of information as compared with conventional cases. Under such circumstances, an offset value from the reception timing of the PDSCH including the RAR message or a PDSCH for scheduling the PDSCH is added to the list. A value of a start symbol and/or a value of the symbol length of the PUSCH for transmitting the MSG3 may be added to the list. Thus, scheduling of the MSG3 corresponding to the RAR message for each beam is enabled.

The UE receives the PDCCH for the RAR. In addition, the UE receives the PDSCH including the RAR message to be transmitted a plurality of times by using the scheduling information of the PDCCH for the RAR. Furthermore, the UE measures the reception quality of each beam. The UE may measure the reception quality of the RS of the PDSCH of each beam. For example, the reception quality of a DMRS may be measured. For example, another RS (for example, a channel state measurement RS) may be provided in the PDSCH to measure the reception quality of the RS. L1-RSRP may be measured as the reception quality. The UE may store reception quality information of each beam. The UE specifies one beam by using the reception quality of each beam in the PDSCH including the RAR message transmitted a plurality of times. The UE may store an identifier of the one beam thus identified. For example, the UE may specify a beam having the best reception quality in the PDSCH including the RAR message transmitted a plurality of times. The UE may store an identifier of the beam having the best reception quality.

The gNB receives the MSG3 from the UE by using the scheduling information of the MSG3 included in the RAR message of each beam. The UE transmits the MSG3 by using the scheduling information of the MSG3 included in the RAR message transmitted on one specified beam, for example, a beam having the best reception quality. Thus, the gNB can specify a beam having the best reception quality received by the UE.

The MSG3 may include reception quality information of each beam for transmitting the PDSCH including the RAR message and/or an identifier of a beam having the best reception quality. The reception quality information of each beam may be associated with a beam identifier. The reception quality information of each beam may be listed. As the reception quality information of each beam, reception quality information of top n beams having good reception quality and/or identifiers of the top n beams having good reception quality may be included in the MSG3. As the reception quality information of each beam, reception quality information of top n beams having good reception quality exceeding the predetermined threshold and/or identifiers of the top n beams having good reception quality exceeding the predetermined threshold may be included in the MSG3. Thus, the gNB can recognize the reception quality of each beam in the UE.

The gNB receives the MSG3 on a beam corresponding to each beam of the PDSCH including the RAR message. The gNB may use a narrow beam to receive the MSG3 transmitted from the UE. With the use of the narrow beam as the beam for transmitting the PDSCH including the RAR message, it is possible to use the narrow beam to receive the MSG3. The gNB preferably transmits the MSG4 of the RA process to the UE using the specified beam. The gNB can transmit the MSG4 on a narrow beam.

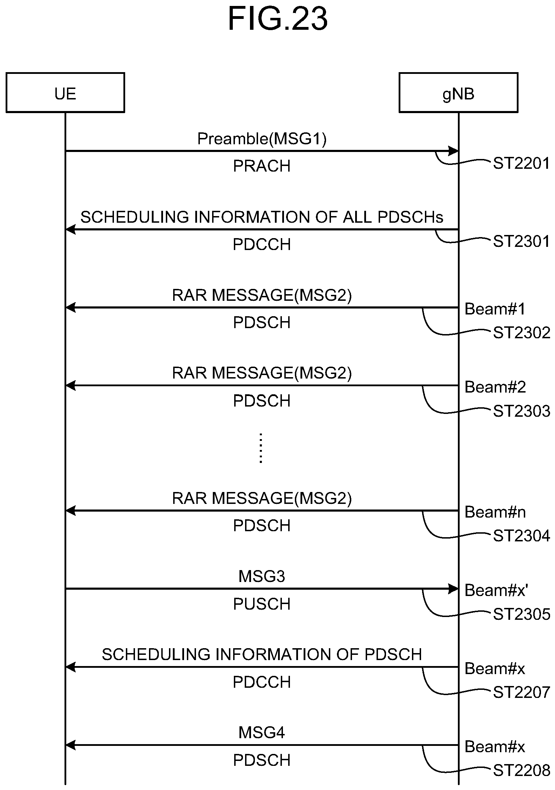

FIG. 23 is a sequence diagram illustrating an example of a method for transmitting the PDSCH including the RAR message a plurality of times using different beams in the RA process in the second modification of the second embodiment. Steps common to those in FIG. 22 used in the description of the first modification of the second embodiment are denoted by the same step numbers as those therein, and a common description will be omitted. The gNB that has received the PRACH from the UE as a result of the execution of step ST2201 transmits the PDCCH for the RAR in step ST2301. The gNB transmits the PDCCH for the RAR on one beam. The same beam as that for the SSB received by the UE is preferably used.

The PDCCH for the RAR includes the scheduling information of the PDSCH including the RAR message for a plurality of times. Consequently, the gNB can transmit the PDSCH including the RAR message subsequent thereto a plurality of times using different beams. The PDCCH for the RAR in step ST2301 is transmitted within the RAR window duration. The UE preferably receives the PDCCH for the RAR within the RAR window duration. The RAR window duration may be a conventional RAR window duration. In that case, the PDCCH for the RAR can be transmitted and received once. The CRC of the DCI of the PDCCH for the RAR is scrambled by the RA-RNTI, and the UE can receive the PDCCH for the RAR by using the RA-RNTI.

In steps ST2302 to ST2304, the gNB transmits the PDSCH including the RAR message a plurality of times in accordance with the scheduling information transmitted on the PDCCH for the RAR. The gNB uses a beam different for each transmission. The beam may be a narrow beam. In that case, the beam is configured to cover the beam for the SSB received by the UE. Thus, it is possible to use the narrow beam for transmitting the PDSCH including the RAR message. The RAR message included in each PDSCH includes the scheduling information of the MSG3 corresponding to the beam for transmitting each PDSCH.

In steps ST2302 to ST2304, the UE receives the PDSCH a plurality of times in accordance with the scheduling information received on the PDCCH for the RAR. The UE receives the PDSCH including the RAR message transmitted in each of steps ST2302 to ST2304, measures the reception quality of each beam, and specifies a beam having the best reception quality. The UE receives the RAR message of the PDSCH of the specified beam.

In step ST2305, the UE transmits the PUSCH including the MSG3 by using the scheduling information of the MSG3 included in the received RAR message. Thus, the UE can transmit the PUSCH including the MSG3 with resource allocation corresponding to the beam of the PDSCH having the best reception quality. The gNB receives the PUSCH in accordance with the scheduling information of the MSG3 included in each of a plurality of the RAR messages. A beam for receiving the PUSCH may be a narrow beam. Reception beams corresponding to the transmission beams of the RAR messages are preferably used. In step ST2305, the gNB receives the PUSCH including the MSG3 transmitted from the UE, and thereby the gNB can acquire the MSG3 and specify a beam having the best reception quality for the UE. That is, the gNB can recognize a beam optimum for the UE among the beams transmitted in steps ST2302 to ST2304.

In step ST2207, the gNB notifies the UE of scheduling information of the PDSCH including the MSG4 on the PDCCH. As the transmission beam, the beam specified by the reception in step ST2305 is preferably used. In step ST2208, the gNB transmits the PDSCH including the MSG4 to the UE in accordance with the scheduling information of the PDSCH including the MSG4. Similarly, as the transmission beam, the best beam specified by the reception in step ST2305 is preferably used. Thus, the gNB can use an optimum narrow beam for the UE also for the transmission of the scheduling information of the MSG4 and that of the MSG4.

With the method disclosed in the present modification, the gNB can transmit the PDSCH including the RAR message on a narrow beam. In addition, the gNB can receive the MSG3 on a reception beam corresponding to a transmission beam having the best reception quality in the UE. Therefore, the gNB can receive the MSG3 on an optimum narrow beam. In addition, the gNB can use an optimum narrow beam for the UE for transmission and reception of the MSG4 and subsequent transmissions and receptions. It is possible to use a narrow beam in the processes from the PDSCH including the RAR message to the MSG4 and subsequent processes, which enables coverage enhancement to be achieved.

### Third Modification of Second Embodiment.

Similarly to the first and second modifications of the second embodiment described above, the present modification discloses another method for solving the problem that a wide beam is used in the RA process and thus a wide coverage cannot be obtained.

In the present modification, the above problem is solved by transmitting the RAR a plurality of times similarly to the first and second modifications described above, but the details of the RAR transmission operation are different therefrom. In order to solve the above problem, the PDCCH for the RAR and the PDSCH including the RAR message are preferably transmitted a plurality of times. Also in the present modification, the RAR is transmitted a plurality of times using different beams. More specifically, the PDCCH for the RAR and the PDSCH including the RAR message are transmitted a plurality of times using different beams. For example, each of beams for transmitting the PDCCH for the RAR and the PDSCH including the RAR message may be a narrow beam. Thus, the coverage enhancement of the PDCCH for the RAR and the PDSCH including the RAR message can be achieved.

The gNB may transmit different narrow beams a plurality of times within a range of the beam specified by the UE that has received the SSB. The gNB may transmit different narrow beams a plurality of times so that the range of the beam specified by the UE that has received the SSB is included. Even if a wide beam is used for transmission of the SSB and the PDCCH for the RAR, the PDCCH for the RAR and the PDSCH including the RAR message are each preferably transmitted on a narrow beam. Thus, the coverage of the PDCCH for the RAR and the PDSCH including the RAR message can be enhanced while including the coverage of the SSB.

The method disclosed in the first modification of the second embodiment may be appropriately applied to the RAR window. The gNB transmits the PDCCH for the RAR for a plurality of times within the RAR window duration.

Regarding the numbers of transmissions of the PDCCH for the RAR and the PDSCH including the RAR message and the notification methods thereof, it is preferable to appropriately apply the method disclosed in the second modification of the second embodiment. The PDCCH for the RAR and the PDSCH including the RAR message are preferably used instead of the PDSCH including the RAR message described in the second modification of the second embodiment. Thus, the UE can recognize the numbers of transmissions of the PDCCH for the RAR and the PDSCH including the RAR message.

On the PDCCH for the RAR, the gNB notifies the UE of the scheduling information of the PDSCH including the RAR message corresponding thereto. The scheduling information may be included in the DCI and notified to the UE on the PDCCH. The pieces of the scheduling information of the PDSCHs including the RAR messages notified to the UE on the PDCCHs for respective RARs may be different. Regarding the pieces of the scheduling information of the PDSCHs including the RAR messages, resource allocations on the time axis may be different. Thus, the PDSCH including the RAR message can be transmitted using a beam corresponding to the beam for transmitting the PDCCH for the RAR. A narrow beam may be used for each beam.

Information on resource allocation on the time axis for the PDSCH including the RAR message may be indicated by an offset from a transmission or reception timing of the PDCCH for the RAR. In such a case, the offset information on the time axis may be the same in the PDSCHs including the RAR messages of respective beams. Thus, even if the offsets are configured to be the same, transmission or reception timings of the PDSCHs including respective RAR messages are different. Therefore, the gNB can transmit the PDSCHs including respective RAR messages on different beams.

A beam identifier of each beam may be included in the DCI included in the PDCCH for the RAR. The scheduling information of the PDSCH including the RAR message of each beam may include a beam identifier of each beam. A sequence using the beam identifier for the DMRS of the PDCCH for the RAR of each beam may be used. The beam identifier may be included in the RAR message. A sequence using the beam identifier for the DMRS of the PDSCH including the RAR message of each beam may be used. These may be combined. Thus, the UE that has received the PDCCH for the RAR and the PDSCH including the RAR message can specify beams on which the PDCCH for the RAR and the PDSCH including the RAR message are transmitted.

Regarding the method for performing the notification of the scheduling information of the MSG3 of the RA process, it is preferable to appropriately apply the method disclosed in the second modification of the second embodiment. In that case, an effect similar to that in the second modification of the second embodiment can be obtained.

The UE receives a plurality of PDCCHs for RARs. In addition, with the use of the scheduling information of the PDCCHs for respective RARs, the UE receives the PDSCH including the RAR message corresponding thereto. Furthermore, the UE measures the reception quality of each beam. The UE may measure the reception quality of the RS of the PDCCH of each beam. The UE may measure the reception quality of the RS of the PDSCH of each beam. For example, the reception quality of a DMRS may be measured. For example, another RS (for example, a channel state measurement RS) may be provided in the PDCCH and/or the PDSCH to measure the reception quality of the RS. The UE may measure the reception quality of the RSs of the PDCCH and the PDSCH of each beam. L1-RSRP may be measured as the reception quality. The UE may store reception quality information of each beam. The UE specifies one beam by using the reception quality of each beam in the PDSCH including the RAR message transmitted a plurality of times. The UE may store an identifier of the one beam thus identified. For example, the UE may specify a beam having the best reception quality in the PDCCH for the RAR and the PDSCH including the RAR message transmitted a plurality of times. The UE may store an identifier of the beam having the best reception quality.

The gNB receives the MSG3 from the UE by using the scheduling information of the MSG3 included in the RAR message of each beam. The UE transmits the MSG3 by using the PDCCH for the RAR and the scheduling information of the MSG3 included in the RAR message transmitted on one specified beam, for example, a beam having the best reception quality. Thus, the gNB can specify a beam having the best reception quality received by the UE.

The MSG3 may include reception quality information of each beam and/or an identifier of a beam having the best reception quality. The reception quality information of each beam may be associated with a beam identifier. The reception quality information of each beam may be listed. As the reception quality information of each beam, reception quality information of top n beams having good reception quality and/or identifiers of the top n beams having good reception quality may be included in the MSG3. As the reception quality information of each beam, reception quality information of top n beams having good reception quality exceeding the predetermined threshold and/or identifiers of the top n beams having good reception quality exceeding the predetermined threshold may be included in the MSG3. Thus, the gNB can recognize the reception quality of each beam in the UE.

The gNB receives the MSG3 on a beam corresponding to each beam of the PDSCH including the RAR message. The gNB may use a narrow beam to receive the MSG3 transmitted from the UE. With the use of the narrow beam as the beams for transmitting the PDCCH for the RAR and the PDSCH including the RAR message, it is possible to use the narrow beam to receive the MSG3. The gNB preferably transmits the MSG4 of the RA process to the UE using the specified beam. The gNB can transmit the MSG4 on a narrow beam.

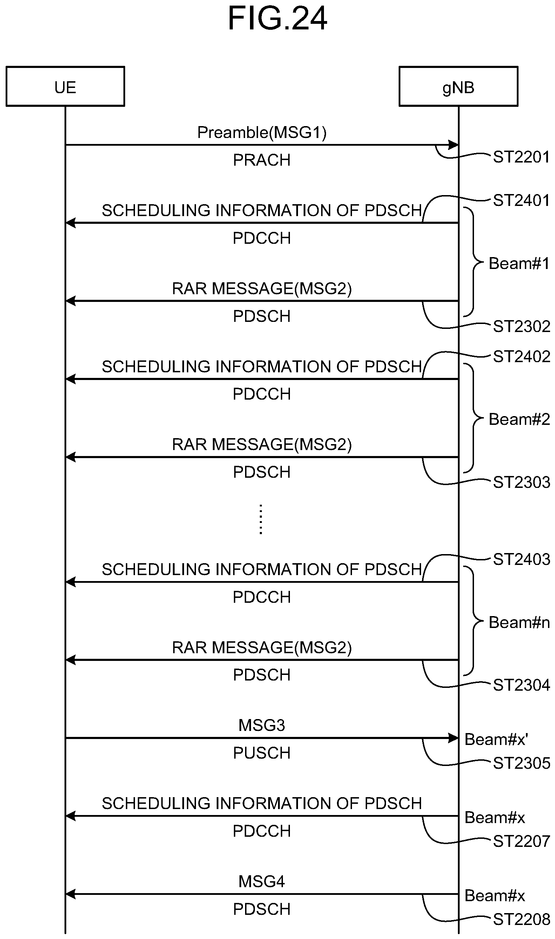

FIG. 24 is a sequence diagram illustrating an example of a method for transmitting the PDCCH for the RAR and the PDSCH including the RAR message a plurality of times using different beams in the RA process in the third modification of the second embodiment. Steps common to those in FIG. 22 used in the description of the first modification of the second embodiment are denoted by the same step numbers as those therein, and a common description will be omitted. The gNB that has received the PRACH from the UE as a result of the execution of step ST2201 transmits the PDCCH for the RAR and the PDSCH including the RAR message a plurality of times using different beams in steps ST2401 and ST2302, steps ST2402 and ST2303, and steps ST2403 and ST2304.

Regarding the transmission of the PDCCH for the RAR and that of the PDSCH including the RAR message corresponding thereto, for example, steps ST2401 and ST2302, the same beam is preferably used. The same applies to steps ST2402 and ST2303, and steps ST2403 and ST2304. The beam may be different from the beam for the SSB received by the UE. Beams for transmitting a plurality of PDCCHs for RARs and the PDSCHs including the RAR messages are configured to cover the beam for the SSB received by the UE. The transmission of the PDCCH for the RAR and that of the PDSCH including the RAR message are performed a plurality of times as described above, and thereby a narrow beam can be used for each transmission.

The PDCCHs for respective RARs each include the scheduling information of the PDSCH including the RAR message corresponding thereto. For example, the PDCCH for the RAR to be transmitted in step ST2401 includes scheduling information of the PDSCH including the RAR message to be transmitted in step ST2302. Consequently, the gNB can transmit not only the PDCCH for the RAR but also the PDSCH including the RAR message using different beams. By performing transmission a plurality of times using different beams, these beams can be set as narrow beams.

The PDCCH for the RAR in each of steps ST2401 to ST2403 is transmitted within the RAR window duration. The UE preferably receives the PDCCH for the RAR within the RAR window duration. The RAR window duration may be that obtained by extending a conventional RAR window duration. The plurality of PDCCHs for RARs can be transmitted and received. The CRC of the DCI of the PDCCH for the RAR is scrambled by the RA-RNTI, and the UE can receive the PDCCH for the RAR by using the RA-RNTI.

The RAR message included in each PDSCH includes the scheduling information of the MSG3 corresponding to the beam for transmitting each PDSCH.

The UE receives the PDCCH for the RAR and the PDSCH including the RAR message a plurality of times in steps ST2401 and ST2302, steps ST2402 and ST2303, and steps ST2403 and ST2304. The UE may receive the PDCCH for the RAR transmitted in each of steps ST2401 to ST2403, measure the reception quality of each beam, and specify a beam having the best reception quality. The UE may receive the PDSCH including the RAR message transmitted in each of steps ST2302 to ST2304, and specify a beam having the best reception quality. The UE may receive the PDCCH for the RAR and the PDSCH including the RAR message transmitted in steps ST2401 and ST2302, steps ST2402 and ST2303, and steps ST2403 and ST2304, measure the reception quality of each beam, and specify a beam having the best reception quality.

The UE receives the PDCCH of the specified beam, and receives the RAR message of the PDSCH in accordance with the scheduling information included in the PDCCH.

In step ST2305, the UE transmits the PUSCH including the MSG3 by using the scheduling information of the MSG3 included in the received RAR message. The gNB receives the PUSCH in accordance with the scheduling information of the MSG3 included in each of a plurality of the RAR messages. In step ST2305, the gNB receives the PUSCH including the MSG3 transmitted from the UE, and thereby the gNB can acquire the MSG3 and specify a beam having the best reception quality for the UE. That is, the gNB can recognize a beam optimum for the UE among the beams transmitted in steps ST2401 and ST2302, steps ST2402 and ST2303, and steps ST2403 and ST2304.

With the method disclosed in the present modification, the gNB can transmit the PDCCH for the RAR and the PDSCH including the RAR message on a narrow beam. In addition, the gNB can receive the MSG3 on a reception beam corresponding to a transmission beam having the best reception quality in the UE. Therefore, the gNB can receive the MSG3 on an optimum narrow beam. In addition, the gNB can use an optimum narrow beam for the UE for transmission and reception of the MSG4 and subsequent transmissions and receptions. It is possible to use a narrow beam in the processes from the PDCCH for the RAR to the MSG4 and subsequent processes, which enables coverage enhancement to be achieved.

In the second modification of the second embodiment and the third modification of the second embodiment, it has been disclosed that regarding the scheduling information of the MSG3 included in the RAR message of each PDSCH, the transmission timings of the MSG3 are configured to be different. As another method, the scheduling information of the MSG3 included in the RAR message of each PDSCH may be information indicating the same resource. The number of resources of the PUSCH including the MSG3 may be one. Thus, the UE can transmit the PUSCH including the MSG3 on the one beam, and therefore, the gNB can receive the PUSCH on the one beam. The one beam is preferably a wide beam. Thus, it is possible to reduce resources to be used, to simplify a reception process of the PUSCH including the MSG3 in the gNB, and to reduce power consumption in the gNB.

The gNB that has received the MSG3 from the UE specifies a beam to be used for the UE by using reception quality information of each beam and/or information on an identifier of a beam having the best reception quality included in the MSG3. The gNB preferably transmits the MSG4 of the RA process to the UE using the specified beam. The gNB can transmit the MSG4 on a narrow beam. Thus, it is possible to use a narrow beam in the process of the MSG4 and subsequent processes.

### Third Embodiment.

As disclosed in the second embodiment, coverage enhancement in the RA process has been studied. In the present embodiment, another method of coverage enhancement of the MSG3 will be disclosed.

Regarding the MSG3 in the RA process, retransmission is supported. In a case where the gNB cannot receive the MSG3 from the UE, the gNB performs scheduling for MSG3 transmission for the UE again. The UE retransmits the MSG3 in accordance with the scheduling information of the MSG3 transmitted from the gNB. Repeated transmission is preferably configured in the retransmission of the MSG3. The number of repeated transmissions may be increased with an increase in the number of retransmissions. By the repeated transmission enabled to be configured also in the retransmission of the MSG3 as described above, the reception quality of the MSG3 in the gNB can be improved. Therefore, the coverage enhancement of the MSG3 can be achieved.

Regarding the MSG3, the scheduling method is different between the first transmission and the retransmission. In the first transmission of the MSG3, scheduling information thereof is included in the RAR message. The scheduling information is provided on the PDSCH. In the retransmission of the MSG3, scheduling information thereof is provided on the PDCCH. As described above, the scheduling method is different between the first transmission and the retransmission of the MSG3.

In a communication system according to the present embodiment, the number of retransmissions and the number of repeated transmissions of the MSG3 are configured in association with each other. The number of repeated transmissions may be configured in association with each retransmission of the MSG3. For example, the number of repeated transmissions is two for a first retransmission, and the number of repeated transmissions is four for a second retransmission. An increase or a decrease or a difference (step) in the number of repeated transmissions for each number of retransmissions may be configured as the association information. For example, the number of repetitions is increased by two every time the number of retransmissions is increased by one. The number of repetitions does not necessarily increase. As the association information, a plurality of the associations may be listed. An index may be assigned to each piece of the association information of the list.

Association information of the first transmission of the MSG3 and the number of repeated transmissions may be provided. Although the association information of the number of retransmissions and the number of repeated transmissions of the MSG3 has been disclosed, as another method, the number of repeated transmissions of the first transmission of the MSG3 may be included in the information. Thus, it is possible to configure the number of repeated transmissions from the first transmission of the MSG3.

The association information may be statically determined in advance in a standard or the like. The gNB may perform the notification of the association information using the MIB or the SIB. The gNB may perform the notification of the association information by RRC signaling.

As another method, the gNB may include the association information in the MAC CE and perform the notification of the association information by MAC signaling. The gNB may include the association information in the RAR message including scheduling information for the first transmission of the MSG3 and perform the notification of the association information on the PDSCH. The association information may be provided on the PDSCH together with the scheduling information for the first transmission of the MSG3, or included in the scheduling information for the first transmission of the MSG3 and provided on the PDSCH. The UE can recognize the number of repetitions in the transmission of the MSG3 by receiving the RAR message. In a case of performing the transmission of the MSG3, the UE transmits the MSG3 by using the association information.

Thus, the gNB can determine the number of repetitions corresponding to the number of transmissions including the retransmission of the MSG3 in consideration of a radio wave propagation environment when performing scheduling of the first transmission of the MSG3. Therefore, it is possible to consider a radio wave propagation environment close to the transmission timing of the MSG3, which enables the reception quality of the MSG3 including retransmission to be improved.

As another method, the gNB may include the association information in the DCI including scheduling information for the retransmission of the MSG3 and perform the notification of the association information on the PDCCH. The association information may be provided on the PDCCH together with the scheduling information for the retransmission of the MSG3, or included in the scheduling information for the retransmission of the MSG3 and provided on the PDCCH. The UE can recognize the number of repetitions in the retransmission of the MSG3 by receiving the DCI including the scheduling information for the retransmission of the MSG3. In a case of performing the retransmission of the MSG3, the UE retransmits the MSG3 by using the association information.

Thus, the gNB can determine the number of retransmissions and the number of repetitions of the MSG3 in consideration of a radio wave propagation environment when performing scheduling of the retransmission of the MSG3. Therefore, it is possible to consider a radio wave propagation environment closer to the retransmission timing of the MSG3, which enables the reception quality in retransmission of the MSG3 to be improved.

As another method, information as to whether to execute repeated transmission may be provided. The information may be activation or deactivation information of the repeated transmission. The information as to whether to execute the repeated transmission may be information indicating execution only. It is preferable to determine that in a case where the information is absent, the repeated transmission is not executed. Alternatively, the information as to whether to execute the repeated transmission may be information indicating no execution only. It is preferable to determine that in a case where the information is absent, the repeated transmission is executed.

The gNB may include the information in the RAR message including the scheduling information for the first transmission of the MSG3 and perform the notification of the information on the PDSCH. Alternatively, the gNB may include indexes indicating the association information on the association list in the DCI including the scheduling information for the retransmission of the MSG3 and perform the notification of the indexes on the PDCCH. Thus, it is possible to dynamically configure the repeated transmission.

The UE determines whether to execute repeated transmission in the first transmission or the retransmission depending on the configuration. In a case where the execution of the repeated transmission is indicated, the repeated transmission of the MSG3 may be performed by using the number of repetitions configured using the association information of the number of transmissions and the number of repeated transmissions of the MSG3 disclosed above.

As another method, the gNB may transmit information on the number of repeated transmissions to the UE together with the information as to whether to execute the repeated transmission. The information on the number of repeated transmissions may be transmitted together with the information indicating the execution of the repeated transmission. In a case where repetition information indicates the execution, the UE may perform the repeated transmission of the MSG3 by using the information on the number of repeated transmissions transmitted together.

Thus, it is possible to consider a radio wave propagation environment closer to the transmission timing of the MSG3, which enables the reception quality in transmission of the MSG3 to be improved.

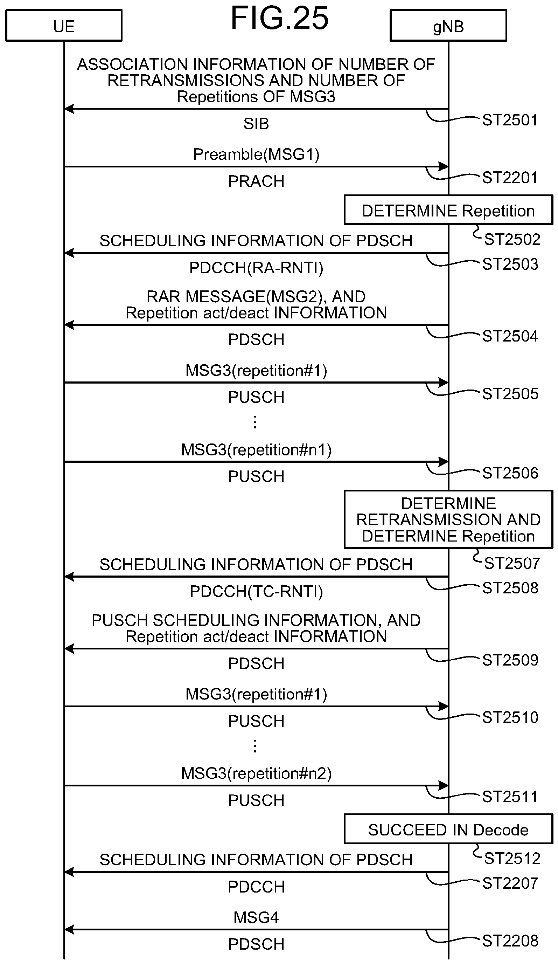

FIG. 25 is a sequence diagram illustrating an example of a method for configuring repeated transmission in retransmission of the MSG3 in the third embodiment. Steps common to those in FIG. 22 used in the description of the first modification of the second embodiment are denoted by the same step numbers as those therein, and a common description will be omitted. In step ST2501, the gNB transmits association information of the number of retransmissions and the number of repeated transmissions (the number of repetitions) of the MSG3. The gNB includes the information in the SIB and transmits the information. In step ST2201, the UE transmits the PRACH to the gNB in order to access the gNB. In step ST2502, the gNB receives the PRACH from the UE, determines to transmit the MSG2, and determines to configure repeated transmission of the MSG3. In step ST2503, the gNB transmits the PDCCH for the RAR to the UE. The PDCCH includes the scheduling information of the PDSCH on which the RAR message is transmitted.

In step ST2504, the gNB transmits information indicating whether to execute repeated transmission together with the RAR message, or includes the information indicating whether to execute repeated transmission in the RAR message and performs the transmission thereof. In step ST2504, if the information indicates execution of the repeated transmission, the UE that has received the information determines the number of repeated transmissions (n1) of the first transmission of the MSG3 by using the association information of the number of retransmissions and the number of repeated transmissions of the MSG3 provided in step ST2501. In steps ST2505 to ST2506, the UE transmits the PUSCH including the MSG3 the number of times in accordance with the number of repeated transmissions thus determined.

In step ST2507, the gNB determines MSG3 retransmission for the UE. In addition, the gNB determines to configure repeated transmission for the UE. In step ST2508, the gNB transmits the PDCCH for the RAR to the UE.

In step ST2509, the gNB transmits information indicating whether to execute repeated transmission together with the PUSCH scheduling information for retransmission of the MSG3, or includes the information indicating whether to execute repeated transmission in the scheduling information and performs the transmission thereof. In step ST2509, if the information indicates execution of the repeated transmission, the UE that has received the information determines the number of repeated transmissions (n2) of the first retransmission of the MSG3 by using the association information of the number of retransmissions and the number of repeated transmissions of the MSG3 provided in step ST2501. In steps ST2510 to ST2511, the UE transmits the PUSCH including the MSG3 the number of times in accordance with the number of repeated transmissions thus determined.

In step ST2512, the gNB succeeds in demodulating the MSG3 received from the UE. When succeeding in demodulating the MSG3, the gNB executes steps ST2207 and ST2208 to transmit the MSG4 to the UE.

With the method disclosed in the present embodiment, it is possible to perform repeated transmission of transmission of the MSG3 in the RA process. Therefore, the reception quality of the MSG3 in the gNB can be improved, and thus the coverage enhancement of the MSG3 can be achieved.

### First Modification of Third Embodiment.

In the present modification, another method of coverage enhancement of the MSG3 will be disclosed.

In the present modification, the coverage enhancement of the MSG3 is realized by configuring transmission power in retransmission of the MSG3. The transmission power may be increased with an increase in the number of retransmissions. By the transmission power enabled to be configured in the retransmission of the MSG3 as described above, the reception quality of the MSG3 in the gNB can be improved. Therefore, the coverage enhancement of the MSG3 can be achieved.

In the present modification, the number of retransmissions of the MSG3 and the transmission power are configured in association with each other. The transmission power may be configured in association with each retransmission of the MSG3. The association information is as follows: for example, the transmission power is P1 for a first retransmission, and the transmission power is P2 for a second retransmission. P1 and P2 may be power values. P1 and P2 may be each an offset value from a predetermined power value. The predetermined power value may be a power value derived by the UE using path loss.

An increase or a decrease or a difference (step) in the transmission power for each number of retransmissions may be configured as the association information. For example, the power is increased by ΔP every time the number of retransmissions is increased by one. For example, in a case where the transmission power of the first transmission is P0, that of the first retransmission is P0+ΔP, and that of the second retransmission is P0+ΔP+ΔP. The transmission power does not necessarily increase. An increase/decrease value of the transmission power may be different for each number of retransmissions. For example, the increase/decrease value of the transmission power of the first retransmission is ΔP1, and that of the second retransmission is ΔP2. As the association information, a plurality of the associations may be listed. An index may be assigned to each piece of the association information of the list.

An upper limit value of the transmission power may be provided. The upper limit value of the transmission power may be configured for each number of retransmissions of the MSG3. Alternatively, the upper limit value may be configured not for each number of retransmissions but for transmission of the MSG3. For example, in a case where the transmission power increases with the retransmission of the MSG3 and exceeds the upper limit value of the transmission power, the transmission power is preferably configured to the upper limit value. Thus, an interference reduction effect can be obtained.

Association information of the first transmission of the MSG3 and the transmission power may be provided. Although the association information of the number of retransmissions of the MSG3 and the transmission power has been disclosed, as another method, the transmission power of the first transmission of the MSG3 may be included in the information. Thus, it is possible to configure the transmission power from the first transmission of the MSG3.

As a method for configuring transmission power in retransmission of the MSG3, it is preferable to appropriately apply the method disclosed in the third embodiment for configuring information in which the number of retransmissions and the number of repeated transmissions of the MSG3 are associated with each other. The transmission power in retransmission of the MSG3 can be configured.

With the method disclosed in the present modification, it is possible to configure the transmission power in retransmission of the MSG3 in the RA process. Therefore, the reception quality of the MSG3 in the gNB can be improved, and thus the coverage enhancement of the MSG3 can be achieved.

The transmission power may be configured in repeated transmission in retransmission of the MSG3. In that case, it is preferable to appropriately combine and apply the method for configuring the repeated transmission in the retransmission of the MSG3 disclosed in the third embodiment and the method for configuring the transmission power in the retransmission of the MSG3 of the present modification. For example, the transmission power is configured for each number of repeated transmissions in the retransmission of the MSG3. As the configuration method, it is preferable to appropriately apply the method for configuring the transmission power in the retransmission of the MSG3 of the present modification. Thus, even in a case where repeated transmission can be performed in retransmission of the MSG3, transmission power for each repeated transmission can be configured. Therefore, the reception quality of the MSG3 in the gNB can be improved, and thus the coverage enhancement of the MSG3 can be achieved.

### Fourth Embodiment.

In the third embodiment, the method has been disclosed in which the retransmission and the repeated transmission of the MSG3 are executed in combination, thereby realizing coverage enhancement. In a case where such a method is applied, for example, when the gNB receives some repeated transmissions of the MSG3, demodulation can be correctly performed in some cases. In such a case, regarding the repeated transmissions of the MSG3, it is a waste of resources for the UE to perform transmission for all the number of repeated transmissions thus configured, and resource usage efficiency is reduced. In addition, unnecessary power consumption in the UE is increased. In order to solve such a problem, it is required to stop the repeated transmission of the MSG3 at an early stage.

The MSG3 is transmitted on the PUSCH. A method for canceling repeated transmission of the PUSCH has been already standardized. However, the standardized method for canceling repeated transmission of the PUSCH cannot be applied to the UE which is not in the RRC_CONNECTED state. The UE that transmits the MSG3 has not yet reached the RRC_CONNECTED state. Therefore, the standardized method for canceling repeated transmission of the PUSCH cannot be applied as the method for stopping repeated transmission of the MSG3.

In view of such circumstances, the present embodiment discloses a method for stopping repeated transmission of the MSG3 at an early stage.

In the present embodiment, information about stop (which may be cancellation) of the repeated transmission of the MSG3 is provided so that the repeated transmission of the PUSCH can be stopped in a state before reaching the RRC_CONNECTED state. Hereinafter, the information may be referred to as MSG3 stop information. In a communication system according to the fourth embodiment, the gNB notifies the UE of the information about stop of the repeated transmission of the MSG3. The notification may be performed between the configuration of the repeated transmission of the MSG3 and the end of the repeated transmission of the MSG3 performed last in the UE. The MSG3 stop information may be notified to the UE once or a plurality of times. The gNB may perform the notification until the gNB recognizes that the repeated transmission of the MSG3 from the UE is stopped.

The MSG3 stop information is notified from the gNB to the UE by using a downlink communication symbol. In a case where the repeated transmission of the MSG3 is the PUSCH repetition type A, the MSG3 stop information may be notified to the UE in a slot including the downlink communication symbol. In a case where the repeated transmission of the MSG3 is the PUSCH repetition type B, the notification may be performed by using the downlink communication symbol. The gNB may notify the UE of the MSG3 stop information for a plurality of times within one slot.

Thus, the gNB can notify the UE of the MSG3 stop information.

When receiving the configuration of the repeated transmission of the MSG3 from the gNB, the UE starts monitoring the MSG3 stop information from the gNB. When performing a first transmission of the MSG3, the UE may start monitoring the MSG3 stop information from the gNB. The UE monitors the MSG3 stop information from the gNB until the repeated transmission of the MSG3 ends or until the MSG3 stop information is received. The UE monitors the MSG3 stop information from the gNB with the downlink communication symbol. The UE may monitor the MSG3 stop information from the gNB in each slot or each mini-slot with the downlink communication symbol. When receiving the MSG3 stop information, the UE stops the repeated transmission of the MSG3. In addition, when receiving the MSG3 stop information, the UE may end the monitoring of the MSG3 stop information.

The gNB may notify the UE of the MSG3 stop information on the PDCCH. In that case, the UE monitors the PDCCH. The MSG3 stop information may be included in the DCI and notified to the UE on the PDCCH. The MSG3 stop information may be included in DCI format 0_0. Alternatively, a new DCI format for including the MSG3 stop information may be provided. This is effective in a case of using a small number of bits for the MSG3 stop information.

As described above, the PDCCH including the MSG3 stop information is preferably configured.

The gNB scrambles a CRC of the DCI including the MSG3 stop information with a temporary cell-radio network temporary identifier (TC-RNTI). In that case, the TC-RNTI is notified from the gNB to the UE in the RAR message including the scheduling information of the MSG3. The CRC of the DCI including the MSG3 stop information is scrambled by the TC-RNTI. Thus, the UE determines whether the DCI has been scrambled by the TC-RNTI included in the RAR message, which makes it possible to determine whether it is the PDCCH including the MSG3 stop information at an early stage easily.

As another method, the CRC of the DCI including the MSG3 stop information is scrambled by a random access-RNTI (RA-RNTI). In that case, the DCI including the scheduling information of the RAR message is scrambled by the RA-RNTI and notified from the gNB to the UE. The UE recognizes the RA-RNTI prior to MSG3 transmission. The CRC of the DCI including the MSG3 stop information is scrambled by the RA-RNTI. In a case where the RA-RNTI is used, DCI format 1_0 may be used for the DCI. Thus, the UE determines whether the DCI has been scrambled by the RA-RNTI, which makes it possible to determine whether it is the PDCCH including the MSG3 stop information at an early stage easily.

As another method, a new RNTI for scrambling the CRC of the DCI including the MSG3 stop information may be provided. For example, CI2-RNTI is employed. In that case, the gNB may include the CI2-RNTI in the RAR message and notify the UE of the CI2-RNTI. The UE can recognize the CI2-RNTI prior to MSG3 transmission. Therefore, by determining, in the repeated transmission of the MSG3, whether the DCI including the MSG3 stop information transmitted from the gNB has been scrambled by the CI2-RNTI, it is possible to determine whether it is the PDCCH including the MSG3 stop information at an early stage easily.

As another method, an RNTI for scrambling the CRC of the DCI including the MSG3 stop information may be derived from another RNTI. For example, the RNTI may be derived from the RA-RNTI. In that case, the necessity of separately notifying the UE of the RNTI for scrambling the CRC of the DCI including the MSG3 stop information is eliminated. That is, the amount of information necessary for notification of the MSG3 stop information can be reduced.

As another method, there may be no MSG3 stop information. The UE may determine to stop the repeated transmission of the MSG3 depending on whether the DCI scrambled by the RNTI disclosed above has been received. The UE preferably determines that the MSG3 is to be stopped when receiving the PDCCH scrambled by the RNTI disclosed above. The UE preferably determines that the MSG3 is not to be stopped when not receiving the PDCCH scrambled by the RNTI disclosed above.

Thus, the UE can receive the MSG3 stop information from the gNB. In a case where the gNB can demodulate the repeated transmission of the PUSCH including the MSG3 from the UE, it is possible to stop the repeated transmission of the MSG3 at an early stage in the UE. The case where the gNB can demodulate the repeated transmission of the PUSCH including the MSG3 from the UE may be a case where the repeated transmission of the MSG can be decoded. Thus, usage efficiency of resources for repeated transmission of the MSG3 can be improved. In addition, unnecessary power consumption in the UE can be reduced.

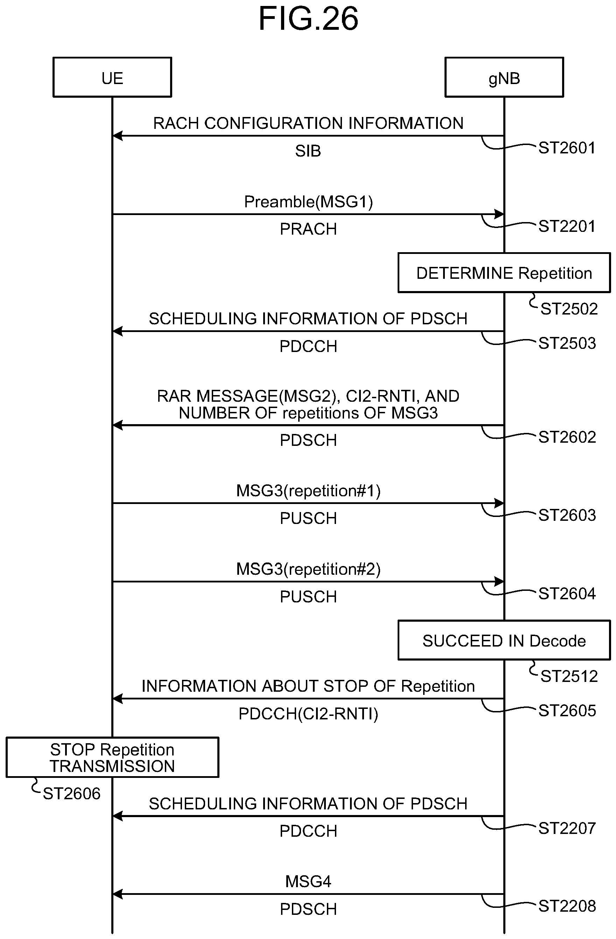

FIG. 26 is a sequence diagram illustrating an example of a method for stopping repeated transmission of the MSG3 at an early stage in the fourth embodiment. Steps common to those in FIG. 25 used in the description of the third embodiment are denoted by the same step numbers as those therein, and a common description will be omitted. In step ST2601, the gNB transmits RACH configuration information. The gNB includes the information in the SIB and transmits the information. In step ST2201, the UE starts the RA process in order to access the gNB.

In step ST2602, the gNB transmits the number of repeated transmissions of the MSG3 and the CI2-RNTI together with the RAR message, or includes the number of repeated transmissions of the MSG3 and the CI2-RNTI in the RAR message and performs the transmission thereof. The UE that has received the information in step ST2602 starts the repeated transmission of the MSG3 from step ST2603. In addition, the UE that has received the information starts detecting the PDCCH on which the CRC of the DCI is scrambled by the CI2-RNTI. The UE performs the repeated transmission of the MSG3 until receiving the PDCCH on which the CRC of the DCI is scrambled by the CI2-RNTI or until the number of repeated transmissions of the MSG3 is reached.

In step ST2604, the UE performs a second repeated transmission of the MSG3. The gNB that has received the second repeated transmission in step ST2604 succeeds in decoding the MSG3 in step ST2512. The gNB that has succeeded in decoding the MSG3 transmits the MSG3 stop information to the UE in step ST2605. The gNB includes the MSG3 stop information in the DCI in which the CRC is scrambled by the CI2-RNTI and transmits the MSG3 stop information on the PDCCH.

The UE that has started detecting the PDCCH on which the CRC of the DCI is scrambled by the CI2-RNTI can receive the PDCCH transmitted from the gNB in step ST2605. In step ST2605, the UE acquires the MSG3 stop information included in the PDCCH. In step ST2606, the UE stops the repeated transmission of the MSG3. As described above, even in a case where the number of repeated transmissions of the MSG3 has not been reached, the UE stops the repeated transmission without transmitting the remaining MSG3.

The gNB that has transmitted the MSG3 stop information to the UE in step ST2605 executes steps ST2207 and ST2208 to transmit the MSG4 to the UE.

Thus, for example, in a case where the MSG3 from the UE is correctly decoded by the gNB, it is possible to stop the repeated transmission of the MSG3 in the UE at an early stage.

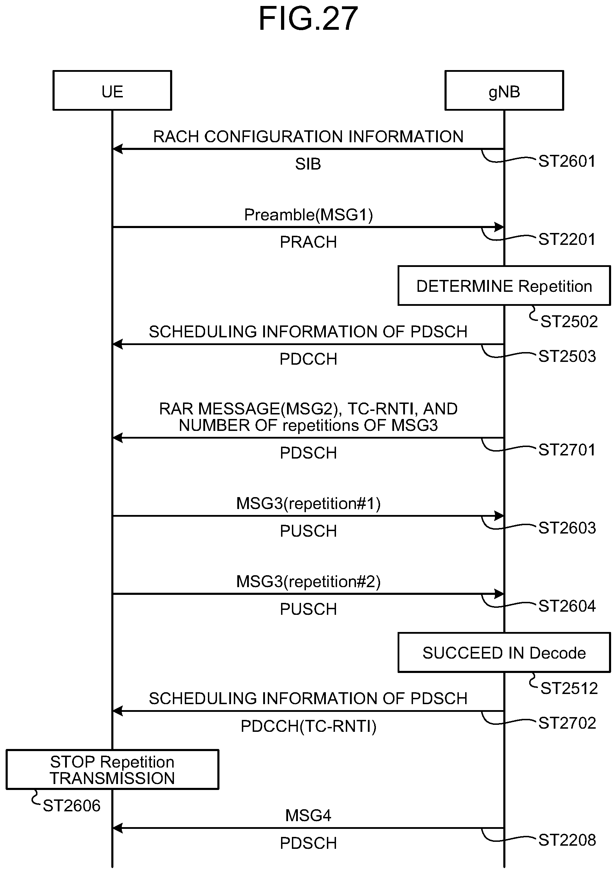

FIG. 27 is a sequence diagram illustrating another example of the method for stopping repeated transmission of the MSG3 at an early stage in the fourth embodiment. Steps common to those in FIG. 26 are denoted by the same step numbers as those therein, and a common description will be omitted. In step ST2701, the gNB transmits the number of repeated transmissions of the MSG3 and the TC-RNTI together with the RAR message, or includes the number of repeated transmissions of the MSG3 and the TC-RNTI in the RAR message and performs the transmission thereof. The UE that has received the information in step ST2701 starts the repeated transmission of the MSG3 from step ST2603. In addition, the UE that has received the information starts detecting the PDCCH on which the CRC of the DCI is scrambled by the TC-RNTI. The UE performs the repeated transmission of the MSG3 until receiving the PDCCH on which the CRC of the DCI is scrambled by the TC-RNTI or until the number of repeated transmissions of the MSG3 is reached.

The gNB that has succeeded in decoding the MSG3 includes the scheduling information of the PDSCH including the MSG4 in the DCI, and transmits the scheduling information to the UE on the PDCCH in step ST2702. The gNB includes the scheduling information in the DCI in which the CRC is scrambled by the TC-RNTI and transmits the scheduling information on the PDCCH.

The UE that has started detecting the PDCCH on which the CRC of the DCI is scrambled by the TC-RNTI can receive the PDCCH transmitted from the gNB in step ST2702. The UE that has received the PDCCH on which the CRC of the DCI is scrambled by the TC-RNTI stops the repeated transmission of the MSG3 in step ST2606. That is, the UE receives the PDCCH on which the CRC of the DCI is scrambled by the TC-RNTI, thereby determining that the MSG3 is normally decoded by the gNB. As described above, even in a case where the number of repeated transmissions of the MSG3 has not been reached, the UE stops the repeated transmission without transmitting the remaining MSG3.

The gNB that has transmitted the scheduling information of the PDSCH including the MSG4 to the UE in step ST2702 transmits the MSG4 in step ST2208.

Thus, for example, in a case where the MSG3 from the UE is correctly decoded by the gNB, it is possible to stop the repeated transmission of the MSG3 in the UE at an early stage. In addition, since there is no need to transmit the MSG3 stop information, the amount of signaling can be reduced.

With the method disclosed in the present embodiment, for example, in a case where the MSG3 from the UE is correctly decoded by the gNB, it is possible to stop the repeated transmission of the MSG3 in the UE at an early stage. Consequently, the coverage enhancement of the MSG3 can be achieved, and resource usage efficiency can be improved. In addition, unnecessary power consumption in the UE can be prevented from increasing.

Information on reduction in the number of repetitions of the MSG3 may be provided. The information may be the number of repetitions of the MSG3 after notification of the information. Alternatively, the information may be the number of repetitions to be reduced from the number of repetitions of the MSG3 that has been already configured. For example, in a case where the gNB is likely to be able to correctly decode the MSG3 from the UE, the gNB notifies the UE of the information on reduction in the number of repetitions of the MSG3. As a notification method, it is preferable to appropriately apply the method disclosed above.

Information on extension in the number of repetitions of the MSG3 may be provided. The information may be the number of repetitions of the MSG3 after notification of the information. Alternatively, the information may be the number of repetitions to be extended from the number of repetitions of the MSG3 that has been already configured. For example, in a case where the gNB is not likely to be able to correctly decode the MSG3 from the UE, the gNB notifies the UE of the information on extension in the number of repetitions of the MSG3. As a notification method, it is preferable to appropriately apply the method disclosed above.

Thus, the number of repeated transmissions can be appropriately controlled depending on the reception status of the MSG3 in the gNB. Consequently, the coverage enhancement of the MSG3 can be achieved, and resource usage efficiency can be improved. In addition, unnecessary power consumption in the UE can be prevented from increasing.

### Fifth Embodiment.

As described above, coverage enhancement can be achieved by increasing the number of repeated transmissions of the MSG3. However, in a case where an unnecessarily large number of repetitions is configured, a waste of resources may be generated. In addition, unnecessary power consumption in the UE is increased. Therefore, more efficient configuration of the number of repeated transmissions of the MSG3 is required.

The present embodiment discloses a method for solving such a problem.

In order to solve the above problem, the gNB of a communication system according to the present embodiment configures repeated transmission of the MSG3 depending on a PRACH preamble group in the RA process. Here, in NR, the PRACH preamble is divided into two groups of a group A and a group B. For example, the gNB configures the repeated transmission in a case of the group B. In a case of the group A, the repeated transmission need not be configured. The group B is used by the UE for the PRACH preamble when the size of the MSG3 is larger than a predetermined amount. In a case where the size of the MSG3 is large, a lot of resources cannot be used as resources allocatable to the transmission of the MSG3, and thus the communication quality may be deteriorated. In a case where the PRACH preamble selected by the UE is the group B, the gNB can improve the communication quality of the MSG3 by configuring the repeated transmission of the MSG3.

The gNB may configure the number of repeated transmissions of the MSG3 depending on a PRACH preamble group. Consequently, it is possible to configure more flexible repeated transmission.

As described above, by configuring the repeated transmission of the MSG3 depending on a group used for the PRACH preamble, the communication quality of the MSG3 can be improved, and thus the coverage enhancement of the MSG3 can be achieved. In addition, since the repeated transmission of the MSG3 can be configured depending on the size of the MSG3, it is possible to more efficiently configure the number of repeated transmissions of the MSG3.

The number of PRACH preamble groups may be increased. There are conventionally two groups, but the number of groups may be three or more. The number of contention-based groups may be three or more. A subgroup of a conventional group may be formed. For example, the group A may be divided into two groups to form groups A1 and A2. For example, the group B may be divided into two groups to form groups B1 and B2.

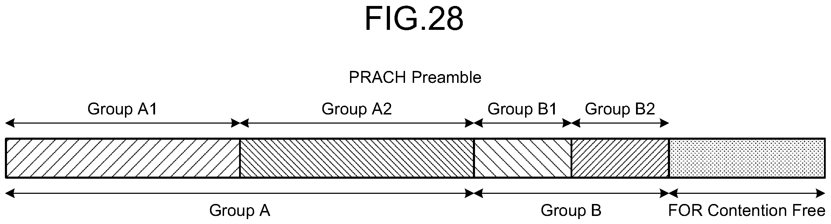

FIG. 28 is a diagram illustrating an example in a case where the number of PRACH preamble groups is four in the fifth embodiment. A contention-based group A is divided into two groups to form groups A1 and A2, and a group B is divided into two groups to form groups B1 and B2. That is, four groups A1, A2, B1, and B2 are configured.

Each group may correspond to the number of repeated transmissions of the MSG3. For example, the conventional group A is divided into groups A1 and A2, and the group B is divided into groups B1 and B2. The groups A1 and A2 are configured corresponding to the number of repeated transmissions of the MSG3. For example, the group A1 may be configured to be equal to or less than Ra1 as the number of repeated transmissions of the MSG3, and the group A2 may be configured to be larger than Ra1 as the number of repeated transmissions of the MSG3. The groups B1 and B2 are configured corresponding to the number of repeated transmissions of the MSG3. Similarly, the group B1 may be configured to be equal to or less than Rb1 as the number of repeated transmissions of the MSG3, and the group B2 may be configured to be larger than Rb1 as the number of repeated transmissions of the MSG3.

The number of repeated transmissions of the MSG3 corresponding to each group may be statically determined in advance in a standard or the like. Alternatively, a CN may perform a configuration thereof and notify the gNB of the configuration. As the CN, operations, administration and maintenance (OAM) may perform the configuration and notify the gNB of the configuration. As the CN, a node (which may be a function) having an orchestration function may perform the configuration and notify the gNB of the configuration. Alternatively, the gNB may make the determination. Thus, the gNB can configure the number of repeated transmissions of the MSG3 depending on a PRACH preamble group transmitted from the UE.

The UE may select a group corresponding to the number of repeated transmissions of the MSG3. The UE selects and transmits a PRACH preamble in the selected group.

The UE may select a group by using a value of path loss. A predetermined threshold may be provided for the path loss for the purpose of group selection. The predetermined threshold may be statically determined in a standard or the like. The gNB may perform notification using the MIB or the SIB. The predetermined threshold is used to select a group corresponding to the number of repeated transmissions of the MSG3.

For example, the path loss is introduced into criteria of group selection in a case where the MSG3 is a CCCH. The UE selects a group corresponding to the number of repeated transmissions of the MSG3 by using the size of the MSG3 and the path loss. For example, a predetermined threshold of the size of the MSG3 is provided, and in a case where the size is equal to or larger than the threshold, the size of the MSG3 is set as L. In a case where the size is smaller than the threshold, the size of the MSG3 is set as S. For example, in a case where the path loss is equal to or greater than a predetermined threshold, the path loss is set as L. In a case where the path loss is smaller than the threshold, the path loss is set as S.

For example, the UE uses the group A1 in a case where the size of the MSG3 is S and the path loss is S. The UE uses the group A2 in a case where the size of the MSG3 is S and the path loss is L. The UE uses the group B1 in a case where the size of the MSG3 is L and the path loss is S. The UE uses the group B2 in a case where the size of the MSG3 is L and the path loss is L. The UE evaluates the size of the MSG3 and the path loss in this manner, and determines which group to use for the PRACH preamble as described above. The UE transmits the PRACH by using the PRACH preamble in the group thus determined.

The gNB specifies a PRACH preamble group by using the PRACH preamble transmitted from the UE. The gNB determines, from the specified group, whether the repeated transmission of the MSG3 is performed. The gNB may determine, from the specified group, the number of repeated transmissions of the MSG3.

A group may be provided for the UE to request a configuration of the repeated transmission of the MSG3.

The group may correspond to the number of repeated transmissions of the MSG3. For example, the groups A1 and A2 and the groups B1 and B2 disclosed in the above example are employed. The UE determines a PRACH preamble group corresponding to the number of repeated transmissions of the MSG3 to be requested, for example, depending on the situation of the UE and the reception quality of the SSB. The UE transmits the PRACH by using a preamble in the group thus determined. The gNB determines the number of repeated transmissions of the MSG3 by using the PRACH preamble group received from the UE.

Thus, the UE can request the configuration of the repeated transmission of the MSG3. For example, depending on the situation of the UE and the SSB reception quality in the UE, the gNB can configure the number of repeated transmissions of the MSG3.

With the method disclosed in the present embodiment, the gNB can determine the configuration of the repeated transmission of the MSG3 depending on a PRACH preamble group selected by the UE. The gNB can determine the configuration of the repeated transmission of the MSG3 depending on the size of the MSG3, the path loss in the UE, the reception quality of the SSB, and the like. Since the gNB can appropriately perform the configuration of the repeated transmission of the MSG3 for the UE, coverage enhancement can be achieved, a waste of resources can be reduced, and resource usage efficiency can be improved.

### Sixth Embodiment.

In NR, a contention-based RA process may be performed in an abnormal state. Examples of the abnormal state include a state of beam failure recovery (BFR) and a state in which out-of-sync is detected. A method for configuring an initial access process of SSB transmission/reception, RA process, or the like in such an abnormal state is not disclosed at all in the standards and the like already established so far including Non Patent Literatures 1 to 25 described above.

The present embodiment discloses a method for configuring an initial access process in such an abnormal state.

The gNB performs the notification of information about coverage enhancement before the UE transitions to an abnormal state. The gNB may perform the notification of the information about coverage enhancement when the UE is in the RRC_CONNECTED state. The information about coverage enhancement may be the information disclosed in the first to fifth embodiments. Regarding the information about coverage enhancement, 20 specific examples will be disclosed below.
(1) Information about the configuration of the DMRS of the PUSCH.
(2) The number of repeated transmissions of the PUSCH.
(3) The number of repeated transmissions in PUSCH retransmission.
(4) Information about the decrease in the DMRSs in repeated transmission of the PUSCH.
(5) A list of the information about the decrease in the DMRSs in repeated transmission of the PUSCH.
(6) Information about repeated transmission of the PBCH.
(7) Information about the number of SSBs.
(8) Information about an SS burst interval.
(9) Information about the RAR window.
(10) The number of repeated transmissions of the MSG3.
(11) The number of repeated transmissions in MSG3 retransmission.
(12) Information about the decrease in the DMRSs in repeated transmission of the MSG3.
(13) A list of the information about the decrease in the DMRSs in repeated transmission of the MSG3.
(14) Information about transmission power in repeated transmission of the MSG3.
(15) A list of the information about transmission power in repeated transmission of the MSG3.
(16) RNTI information for receiving MSG3 stop information.
(17) Information about a PRACH preamble group.
(18) Information about repeated transmission of the PRACH.
(19) Information about repeated transmission of the MSGA PUSCH.
(20) A combination of (1) to (19).

The gNB notifies the UE of the information about coverage enhancement by dedicated signaling. The information may be notified to the UE by using RRC signaling. For example, the information may be included in RRC Reconfiguration and notified to the UE. The information may be included in a configuration for BFR and notified to the UE. For example, the information may be included in BeamFailureRecoveryConfig and notified to the UE.

When performing the initial access process in the abnormal state, the UE performs the initial access process by using the information about coverage enhancement acquired most recently from the gNB. In a case where the gNB on which the initial access process is to be performed by the UE in the abnormal state is the same gNB as the gNB from which the information about coverage enhancement has been received, the UE may perform the initial access process by using the received information about coverage enhancement. The UE can acquire the information about coverage in advance, so that the robustness of a return process from the abnormal state can be improved. In addition, since there is no need to transmit and receive the information about coverage enhancement from a cell in the abnormal state, it is possible to return from the abnormal state at an early stage.

In the initial access process in transition from an RRC_INACTIVE state to the RRC_CONNECTED state, the UE performs the initial access process by using the information about coverage enhancement acquired most recently from the gNB. The UE holds the information about coverage enhancement in the RRC_INACTIVE state. The information about coverage enhancement may be effective in a RAN notification area (RNA). Thus, it is possible to improve the robustness of a transition process from the RRC_INACTIVE state to the RRC_CONNECTED state. In addition, since there is no need to receive the information about coverage enhancement from the cell in transition to the RRC_CONNECTED state, it is possible to return to the RRC_CONNECTED state at an early stage.

The gNB may perform the notification of the information about the coverage enhancement of a neighbor cell before the UE transitions to the abnormal state. The gNB may perform the notification of the information about the coverage enhancement of the neighbor cell when the UE is in the RRC_CONNECTED state. The information about coverage enhancement may be associated with an identifier of the neighbor cell. This is effective in a case where the information about the coverage enhancement of each cell is configured. The identifier of the neighbor cell may be a PCI. Since the UE can recognize the PCI by receiving an SS of the cell, the UE can identify the cell at an early stage. The information about coverage enhancement may be associated with a beam identifier. This is effective in a case where the information about coverage enhancement is configured for each beam.

A notification of information about the coverage enhancement of cells each configured by one of gNBs may be performed between the gNBs. An Xn interface may be used for the notification. The notification of the information may be performed by Xn signaling. Thus, the gNBs can each acquire the information about the coverage enhancement of the neighbor cell.

In addition, in NR, the gNB may be separated into a CU and a DU. In such a case, a notification of the information about the coverage enhancement of each cell may be performed between the CU and the DU. In a case where a plurality of cells are configured by a plurality of DUs, a notification of information about the coverage enhancement of a cell corresponding to the DU may be performed between the CU and the DU. An F1 interface may be used for the notification. The notification of the information may be performed by F1 signaling. Thus, even in a case where the gNB is separated into the CU and the DU, the information about coverage enhancement can be appropriately operated.

It is preferable to appropriately apply the method disclosed above as a method for notifying the information about coverage enhancement from the gNB to the UE.

When performing the initial access process in the abnormal state, the UE performs the RA process by using the information about the coverage enhancement of the neighbor cell acquired most recently from the gNB. Even in a case where the gNB on which the initial access process is to be performed by the UE in the abnormal state is a gNB different from the gNB from which the information about the coverage enhancement of the neighbor cell has been received, the UE may perform the initial access process by using the received information about the coverage enhancement of the neighbor cell. Thus, the UE can acquire the information about coverage of the neighbor cell in advance, so that the robustness of the return process from the abnormal state to another cell can be improved. In addition, since there is no need to receive the information about coverage enhancement from a cell in the abnormal state, it is possible to return from the abnormal state at an early stage.

In the initial access process in transition from the RRC_INACTIVE state to the RRC_CONNECTED state, the UE performs the RA process by using the information about the coverage enhancement of the neighbor cell acquired most recently from the gNB. The UE holds the information about the coverage enhancement of the neighbor cell in the RRC_INACTIVE state. The information about the coverage enhancement of the neighbor cell may be effective in the RAN notification area (RNA). The information about the coverage enhancement of the neighbor cell may be effective for the neighbor cell in which the information exists. Thus, the initial access process can be performed even when the UE transitions to the RRC_CONNECTED state in a cell different from a cell including the UE before entering the RRC_INACTIVE state. In addition, it is possible to improve the robustness of the transition process from the RRC_INACTIVE state to the RRC_CONNECTED state. Furthermore, since there is no need to transmit and receive the information about coverage enhancement from the cell in transition to the RRC_CONNECTED state, it is possible to return to the RRC_CONNECTED state at an early stage.

In the initial access process in transition from an RRC_IDLE state to the RRC_CONNECTED state, the UE performs the initial access process by using the information about the coverage enhancement of the cell including the UE and/or the neighbor cell acquired most recently from the gNB. The UE holds the information about coverage enhancement in the RRC_IDLE state. Thus, the initial access process can be performed even when the UE transitions to the RRC_CONNECTED state in a cell the same as or different from a cell including the UE before entering the RRC_IDLE state. In addition, it is possible to improve the robustness of a transition process from the RRC_IDLE state to the RRC_CONNECTED state. Furthermore, since there is no need to transmit and receive the information about coverage enhancement from the cell in transition to the RRC_CONNECTED state, it is possible to return to the RRC_CONNECTED state at an early stage.

The method disclosed above may be applied to the initial access process performed in two steps. As the information about coverage enhancement, information about repeated transmission of the MSGA PUSCH is preferably used. Thus, a similar effect can be obtained also in the initial access process performed in two steps.

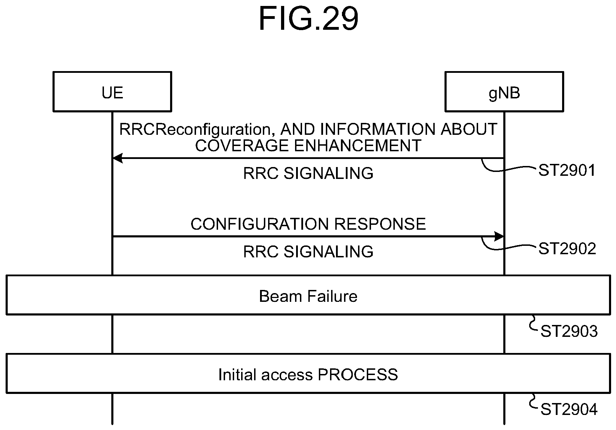

FIG. 29 is a sequence diagram illustrating an example of a method for performing the notification of the information about coverage enhancement before the UE transitions to the abnormal state in the sixth embodiment. In the example illustrated in FIG. 29, while the UE is in the RRC_CONNECTED state with respect to the gNB, the gNB notifies the UE of the information about coverage enhancement in step ST2901. The gNB may notify the UE of the information by dedicated RRC signaling. For example, the information may be included in the RRCReconfiguration message and notified to the UE. When receiving the information, the UE may notify the gNB of a configuration response message in step ST2902. Thus, the gNB can reliably recognize whether the UE has received the information about coverage enhancement. In a case where the gNB cannot receive the configuration response message from the UE, the gNB may notify the UE of the information about coverage enhancement again.

As a method for determining a case where the gNB cannot receive the configuration response message of the information about coverage enhancement from the UE, a predetermined period may be provided. The predetermined period may be managed by a timer. For example, the gNB starts the timer at a notification timing of a message including the information about coverage enhancement, and in a case where the configuration response message of the information about coverage enhancement has been received within the timer, that is, within the predetermined period, the gNB determines that the configuration response message has been received. In a case where the configuration response message of the information about the coverage enhancement could not have been received within the timer, it is determined that the configuration response message cannot be received.

Thus, the UE can receive the information about coverage enhancement in the RRC_CONNECTED state. The UE can receive the information about coverage enhancement in a state in which normal communication can be performed.

In step ST2903, the UE enters an abnormal state. For example, there occurs a beam failure. The UE performs a BFR process due to the occurrence of the beam failure. In step ST2904, the UE starts the initial access process for the gNB. In this initial access process, the UE uses the information about coverage enhancement received in step ST2901. Thus, it is possible to improve the robustness of a transition process to the RRC_CONNECTED state. Furthermore, since there is no need to transmit and receive the information about coverage enhancement from the cell in transition to the RRC_CONNECTED state, it is possible to return to the RRC_CONNECTED state at an early stage.

For example, as the process of step ST2904, the configuration of the number of repetitions in transmission of the MSG3 may be performed, the configuration being disclosed in FIG. 25 used in the description of the third embodiment. In that case, as the process of step ST2904, transmission and reception of the SSB and processes of steps ST2201 to ST2208 in FIG. 25 are performed. In step ST2901, for the UE, the gNB includes the association information of the number of retransmissions and the number of repeated transmissions of the MSG3 in the information about coverage enhancement. The UE performs the processes of steps ST2201 to ST2208 by using the information. Thus, it is possible to perform repeated transmission of transmission of the MSG3 in the initial access process of step ST2904. Therefore, the reception quality of the MSG3 in the gNB can be improved, and thus the coverage enhancement of the MSG3 can be achieved.

In FIG. 29, the same gNB is accessed before and after the beam failure, but a gNB to be accessed may be different before and after the beam failure. In a case of such a different gNB, it is preferable to use the information about coverage enhancement of the neighbor cell.

Although the gNB to be accessed is different before and after the beam failure in the above description, that which is different before and after the beam failure may be a cell configured by the gNB.

With the method disclosed in the present embodiment, in a case of performing the initial access process in the abnormal state, coverage enhancement can be achieved, and the robustness of the transition process to the RRC_CONNECTED state can be improved. In addition, it is possible to transition to the RRC_CONNECTED state at an early stage.

The above-described embodiments and modifications thereof are merely examples, and the embodiments and modifications thereof can be freely combined. In addition, any component of the embodiments and modifications thereof can be appropriately changed or omitted.

The methods disclosed in the above-described embodiments and modifications thereof may be appropriately applied to a communication system using a gNB configured to be divided into a CU and a DU. For example, in the first embodiment, information about the configuration of the DMRS of the PUSCH to be provided on the PDCCH is notified from the CU to the DU. F1 signaling may be used for the notification from the CU to the DU. The DU includes the information about the configuration of the DMRS of the PUSCH received from the CU in the DCI and notifies the UE of the information on the PDCCH. In a case where the CU determines the DMRS configuration for the PUSCH retransmission, the information about the configuration of the DMRS of the PUSCH to be provided on the PDCCH is preferably notified to the DU. The DU can perform a dynamic configuration of the DMRS of the PUSCH for the UE. Thus, the effects indicated in the above-described embodiments and modifications thereof can be obtained also in the communication system using a gNB configured to be divided into a CU and a DU.

For example, in the above-described embodiments and modifications thereof, the subframe is an example of a time unit of communication in the fifth generation communication system. The time unit of communication may be a scheduling unit. In addition, in the above-described embodiments and modifications thereof, the processes described as those performed on a per subframe basis may be performed on a per TTI basis, on a per slot basis, on a per subslot basis, or on a per mini-slot basis.

While the present disclosure has been described in detail, the above description is in all aspects illustrative and not restrictive. It is understood that numerous modifications not illustrated can be devised.

### Reference Signs List

200, 210 communication system; 202 communication terminal device (communication terminal); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other-base-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam.

## Claims

1. A communication system comprising:
a base station; and
a communication terminal connected to the base station, wherein
in a case where the base station causes the communication terminal to transmit a data signal, the base station notifies the communication terminal of information about a demodulation reference signal to be transmitted together with a data signal, and
the communication terminal transmits a data signal and a demodulation reference signal in accordance with the information provided from the base station.

2. The communication system according to claim 1, wherein
in each of a case where the base station causes the communication terminal to transmit a data signal for the first time and a case where the base station causes the communication terminal to retransmit a data signal, the base station notifies the communication terminal of information about a demodulation reference signal to be transmitted together with a data signal.

3. The communication system according to claim 1 or 2, wherein
in a case where the communication terminal repeatedly transmits a data signal, the base station performs control such that the number of demodulation reference signals to be transmitted together with a data signal in second and subsequent transmissions is smaller than the number of demodulation reference signals to be transmitted together with a data signal in a first transmission.

4. The communication system according to any one of claims 1 to 3, wherein
in a case where the demodulation reference signal is unable to be arranged on a physical uplink shared channel in accordance with the information provided from the base station, the communication terminal transmits the demodulation reference signal that does not include the demodulation reference signal, and
in a case where a data signal is received on a physical uplink shared channel that does not include a demodulation reference signal, the base station performs a demodulation process on the received data signal by using a demodulation reference signal already received.

5. The communication system according to any one of claims 1 to 4, wherein
in a case where a request for repeated transmission of a data signal is received from the communication terminal, the base station determines a content of repeated transmission of a data signal performed by the communication terminal on a basis of a content of the request.

6. The communication system according to any one of claims 1 to 5, wherein
the base station arranges a synchronization signal and a physical broadcast channel in different symbols and transmits the synchronization signal and the physical broadcast channel.

7. The communication system according to claim 6, wherein
the base station repeatedly transmits a symbol in which the physical broadcast channel is arranged.

8. The communication system according to any one of claims 1 to 7, wherein
the base station repeatedly executes transmission of scheduling information for allocating a resource to the communication terminal by using different beams in a random access process for the communication terminal to connect to the base station.

9. The communication system according to any one of claims 1 to 8, wherein
the base station repeatedly executes transmission of a response message to the communication terminal by using different beams in a random access process for the communication terminal to connect to the base station.

10. The communication system according to any one of claims 1 to 9, wherein
the base station instructs the communication terminal on the number of times a message is to be retransmitted by the communication terminal in a random access process for the communication terminal to connect to the base station, and on the number of times the message is to be repeatedly transmitted in each of transmission processes of the message.

11. The communication system according to claim 10, wherein
in a case where a determined condition is satisfied while the communication terminal is performing repeated transmission of the message, the base station instructs the communication terminal to end the repeated transmission.

12. The communication system according to claim 10 or 11, wherein
the base station determines the number of times the repeated transmission is to be performed on a basis that which group of predetermined groups a message transmitted from the communication terminal at a start of the random access process belongs to.

13. The communication system according to any one of claims 1 to 12, wherein
the base station instructs the communication terminal on transmission power when the communication terminal is caused to retransmit a message in a random access process for the communication terminal to connect to the base station.

14. The communication system according to any one of claims 1 to 13, wherein
the base station notifies the communication terminal of information about coverage enhancement at a predetermined timing, and
when receiving notification of the information about coverage enhancement from the base station, the communication terminal holds the information, and in a case where an initial access process to the base station is required, the communication terminal performs the initial access process by using the held information.
